# FASCICULE DE BREVET EUROPEEN

(11) **EP 3 464 847 B1**
(45) Date de publication et mention de la délivrance du brevet: **08.04.2020**
(21) Numéro de dépôt: 17721189.3
(22) Date de dépôt: 09.05.2017
(51) Int. Cl.: F01N 3/021, F01N 3/022, B01D 46/00, B01D 46/24, B01D 39/00, C04B 38/00, B01D 53/00

(54) **FILTRE A PARTICULES A GEOMETRIE DE CANAL VARIABLE ET METHODES DE FABRICATION D'UN TEL FILTRE**
PARTIKELFILTER MIT VARIABLER KANALGEOMETRIE UND VERFAHREN ZUR HERSTELLUNG EINES SOLCHEN FILTERS
PARTICULATE FILTER WITH VARIABLE CHANNEL GEOMETRY AND METHODS FOR PRODUCING SUCH A FILTER

(30) Priorité: 31.05.2016 FR 1654910
(43) Date de publication de la demande: 10.04.2019
(73) Titulaire: IFP Energies nouvelles, 92852 Rueil-Malmaison (FR)
(72) Inventeur: RAUX, Stéphane, 69530 ORLIENAS (FR)
(86) Numéro de dépôt international: PCT/EP2017/061078
(87) Numéro de publication internationale: WO 2017/207226

(56) Documents cités:
- EP-A2- 2 924 017
- EP-A2- 2 924 017
- FR-A1- 2 789 327
- JP-A- 2002 317 618
- JP-A- 2002 317 618
- US-A1- 2004 172 929

## Description

### Domaine de l'invention

La présente invention concerne le domaine du traitement des gaz d'échappement des moteurs à combustion, en particulier celui des filtres à particules pour la réduction de la pollution générée par les moteurs.

### Contexte général

De nos jours, les contraintes réglementaires sur les émissions polluantes sont de plus en plus sévères pour les véhicules et autres engins à motorisation Diesel, notamment en ce qui concerne les émissions de particules. Ainsi, les véhicules Diesel sont généralement équipés de filtres à particules pour satisfaire les normes sur les émissions polluantes. L'usage des filtres à particules n'est d'ailleurs pas limité aux véhicules Diesel, et il est attendu dans l'avenir que de tels filtres à particules soient intégrés de plus en plus fréquemment dans les lignes d'échappement des véhicules essence.

Le filtre à particules utilisé dans la ligne d'échappement d'un moteur à combustion interne permet de retenir les particules présentes dans les gaz d'échappement et éviter ainsi qu'elles soient rejetées dans l'atmosphère. Les particules sont majoritairement des particules de suie (composés carbonés). Elles peuvent aussi comprendre des composés inorganiques issus de l'usure des moteurs ou contenus dans les lubrifiants et leurs additifs ou dans les carburants. Ces composés inorganiques forment des cendres qui demeurent dans le filtre et s'accumulent donc durant la vie du moteur. Dans certains cas le filtre peut également comporter une formulation catalytique afin de traiter certaines émissions polluantes présentes sous forme gazeuse dans les gaz d'échappement, telles que des hydrocarbures imbrûlés (HC), des oxydes d'azote (NOx) ou du monoxyde de carbone (CO), pour les transformer en gaz moins nocifs. Ce filtre doit généralement être régénéré périodiquement afin d'éliminer les particules accumulées lors des phases de filtration et de conserver ainsi toutes ses capacités de filtration. Les opérations de régénération consistent à brûler les particules de suie : on augmente typiquement la température du filtre jusqu'à environ 450°C à 600°C, généralement par une augmentation de la richesse des gaz d'échappement qui le traversent sans qu'elle n'atteigne la richesse 1, et on obtient une composition oxydante de ces mêmes gaz pour réaliser la combustion des particules retenues dans ce filtre. Le filtre à particules doit donc être capable de supporter des contraintes thermiques et mécaniques importantes, être résistant à la corrosion des gaz d'échappement, encaisser les chocs et vibrations liées au mouvement du véhicule, et être en général le plus compact possible.

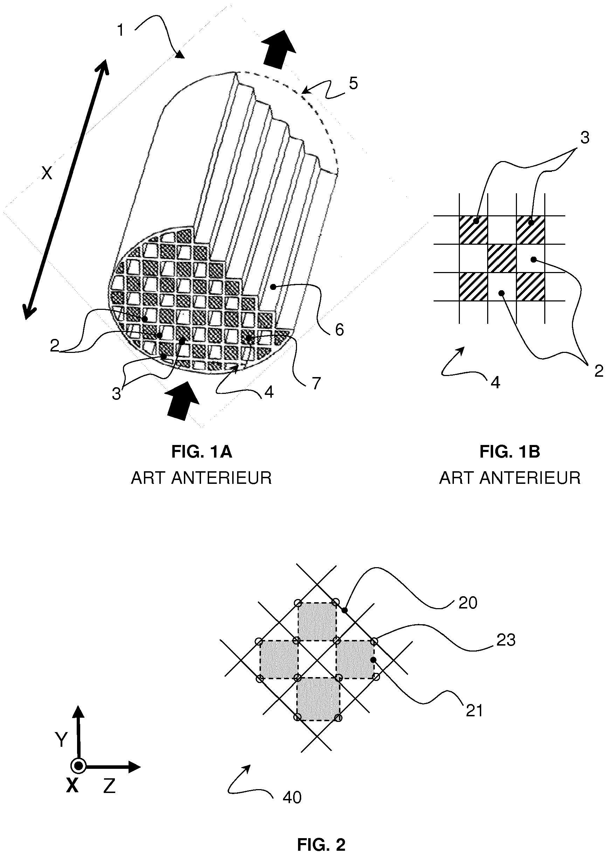

Le filtre à particules consiste classiquement en un substrat céramique présentant une structure de type nid d'abeilles, tel que représenté à la figure 1A, souvent formé par extrusion d'une pâte composée d'un matériau sous forme de particules, typiquement en céramique, présentant une plasticité adéquate à ce type de fabrication. Le substrat du filtre 1 est composé d'un ensemble de canaux adjacents (2, 3) s'étendant entre une face d'entrée 4 et une face de sortie 5 des gaz d'échappement, disposés parallèlement entre eux, et séparés les uns des autres par des parois communes 6, à la manière d'un nid d'abeilles. L'axe X représente l'axe d'écoulement principal des gaz d'échappement. Les canaux sont allongés selon cet axe. Les canaux sont obturés par des bouchons 7 à l'une de leurs extrémités de telle sorte que les gaz d'échappement (représentés par des flèches) entrant dans des canaux laissés uniquement ouverts sur la face d'entrée soient contraints de traverser les parois poreuses communes 6 avec les canaux adjacents laissés uniquement ouverts sur la face de sortie 5 pour ressortir par cette face de sortie. La figure 1B est une vue de face schématique de l'entrée 4 d'un filtre à particules 1 selon cet exemple de structure standard. Les canaux identiques ont une section de forme carrée, sont disposés côte à côte, formant un quadrillage sur la face d'entrée 4 du filtre. Certains de ces canaux sont bouchés (bouchons représentés en hachures) alors que d'autres sont ouverts, selon un motif en damier. Les canaux comportant une ouverture sur la face d'entrée sont bouchés à leur autre extrémité sur la face de sortie, et constituent ainsi les canaux dits d'entrée 2, par lesquels les gaz d'échappement entrent dans le filtre pour sortir par les canaux adjacents bouchés sur la face d'entrée et ouverts sur la face de sortie du filtre qui sont les canaux dits de sortie 3, en traversant les parois poreuses séparant les canaux d'entrée des canaux de sortie adjacents. L'épaisseur des parois séparées les canaux adjacents n'est pas représentée sur la figure 1B.

Cette obturation des canaux à l'une ou l'autre de leurs extrémités assure ainsi le passage obligatoire des gaz d'échappement à travers les parois poreuses séparant les canaux, garantissant la fonction de filtrage des particules contenues dans les gaz d'échappement.

La présence de bouchons dans ces structures pose cependant certains problèmes. D'une part, les bouchons limitent la surface utile des canaux car les bouchons insérés dans les canaux sont en contact avec une partie de la surface des cloisons filtrantes des canaux, et de ce fait cette partie ne peut alors plus assurer sa fonction de filtration des gaz d'échappement. D'autre part, les bouchons peuvent présenter un risque de casse, résultant en une réduction drastique de l'efficacité du filtre. Enfin, les bouchons sur la face d'entrée du filtre contribuent à générer une perte de charge dans le filtre en fonctionnement, car ils dévient brutalement les lignes de courant vers les canaux d'entrée, générant un frottement visqueux. Cette perte de charge a de nombreuses conséquences néfastes lors de l'utilisation du filtre, provoquant notamment une détérioration de l'efficacité du moteur.

Pour s'affranchir de l'utilisation de bouchons et des problèmes associés, la demande de brevet WO94/22556 propose une méthode de déformation des seules extrémités des canaux, par un embout de forme pyramidale par exemple, le canal conservant ensuite sa géométrie à section carrée d'origine dans le reste du filtre. Cette déformation conduit à la fermeture des canaux à l'une de leurs extrémités, assurant ainsi l'obturation des canaux pour le fonctionnement du filtre tel que décrit plus haut.

La demande de brevet US2003/0041575 adresse également la problématique de l'utilisation de bouchons et des problèmes associés, et propose une méthode similaire de déformation des extrémités des canaux, sur une longueur typique de 1 à 5 mm, avec cependant une différence notable qui est que les canaux ne sont pas complètement fermés après déformation et qu'un bouchon de petit dimension est formé avec une étape supplémentaire d'application d'une pâte. Une telle étape supplémentaire d'obturation complexifie la fabrication du filtre, et certains problèmes liés à la présence de bouchons, même de petites dimensions, peuvent subsister.

La demande de brevet US2004/0206062 propose également une fermeture des canaux par déformation avec toutefois une géométrie différente de l'outil d'emboutissage, conduisant à des filtres qui comportent toujours des bouchons à l'une des extrémités des canaux.

La demande de brevet JP2002317618 propose un filtre visant à réduire la perte de charge, présentant une face d'entrée et une face de sortie composées respectivement par uniquement les ouvertures rectangulaires des canaux d'entrée et uniquement les ouvertures rectangulaires des canaux de sortie, formant un grille avec un décalage d'un demi pas entre chaque ouverture. Les canaux présentent deux surfaces latérales se faisant face qui se poursuivent vers l'intérieur, partant d'une face du filtre pour s'étendre jusqu'au voisinage de la face opposée du filtre, selon une forme triangulaire dont le côté intérieur se rétrécit. Le filtre selon ne comporte ainsi pas de bouchons et les faces d'entrée et de sortie limitent la perte de charge. Cependant la disposition et la géométrie des canaux ne permettent pas d'obtenir une surface de filtration satisfaisante. Le document EP 2924017 A2 propose un procédé de fabrication d'un filtre à particules par stéréolithographie d'un modèle 3D numérique.

De manière générale, il est recherché une capacité de filtration maximale pour un encombrement minimal du filtre.

### Objectifs et résumé de l'invention

La présente invention vise ainsi à surmonter au moins en partie les problèmes de l'art antérieur mentionnés, et vise en particulier à répondre à au moins l'un des objectifs suivants :
- fournir un filtre qui permette de limiter la perte de charge lors de son fonctionnement, tout en améliorant le taux de captation des particules,
- fournir un filtre compact, de poids et d'encombrement limité,
- fournir une méthode de fabrication simple d'un tel filtre.

Ainsi, pour atteindre au moins l'un des objectifs susvisés, parmi d'autres, la présente invention propose, selon un premier aspect, un filtre à particules pour collecter les particules des gaz d'échappement d'un moteur à combustion, ledit filtre comportant un corps en matériau poreux (monolithique) allongé selon un axe X, ledit corps comprenant :
- une face d'entrée par laquelle les gaz d'échappement entrent dans le filtre,
- une face de sortie par laquelle les gaz d'échappement ressortent du filtre,
- une pluralité de canaux d'entrée et de canaux de sortie s'étendant entre la face d'entrée et la face de sortie parallèlement à l'axe X, chaque canal d'entrée étant séparé d'un canal de sortie adjacent par une paroi commune filtrante apte à laisser passer les gaz d'échappement, pour former une structure de type nid d'abeille. Les canaux d'entrée et de sortie comportant chacun :
   - une extrémité ouverte de section transversale carrée orthogonalement à l'axe X,
   - une extrémité fermée,
   - une section transversale de référence carrée orthogonalement à l'axe X, située entre lesdites extrémités ouverte et fermée, de préférence située à mi-chemin entre la face d'entrée et la face de sortie, chacun des quatre sommets de la section transversale de référence étant commun à deux canaux d'entrée et deux canaux de sortie, et les quatre sommets de la section transversale de référence carrée ayant une position inchangée pour toute section du canal orthogonalement à l'axe X,
   les extrémités ouvertes des canaux d'entrée étant contiguës sur la face d'entrée et les extrémités ouvertes des canaux de sortie étant contiguës sur la face de sortie, lesdites extrémités ouvertes formant un quadrillage.

La géométrie de chaque canal d'entrée et de sortie est non constante tout au long du canal selon l'axe X, telle que, pour chaque canal d'entrée et de sortie :
- le périmètre de la section du canal décroît de manière continue depuis l'extrémité ouverte du canal jusqu'à la section transversale de référence dudit canal, puis croit de manière continue de ladite section transversale de référence jusqu'à l'extrémité fermée, et
- la surface de la section du canal décroit de façon monotone selon l'axe X depuis l'extrémité ouverte du canal jusqu'à l'extrémité fermée où ladite surface est nulle, ladite extrémité fermée étant située dans le corps du filtre à proximité de face de sortie pour le canal d'entrée et étant située dans le corps du filtre à proximité de la face d'entrée pour le canal de sortie.

De préférence, chaque canal d'entrée et de sortie a une section polygonale d'ordre 4n selon tout plan orthogonal à l'axe X entre l'extrémité ouverte et la section transversale de référence d'une part, et entre la section transversale de référence et l'extrémité fermée d'autre part, n'étant un entier préférentiellement compris entre 2 et 4.

La section polygonale d'ordre 4n peut former un polygone convexe entre l'extrémité ouverte et la section transversale de référence, et former un polygone concave entre la section transversale de référence et l'extrémité fermée.

Selon un mode de réalisation, la section des canaux d'entrée et de sortie est octogonale orthogonalement à l'axe X entre les extrémités ouverte et fermée de chaque canal, à l'exception de la section transversale de référence.

Selon un mode de réalisation, la section des canaux d'entrée et de sortie est dodécagonale orthogonalement à l'axe X entre les extrémités ouverte et fermée de chaque canal, à l'exception de la section transversale de référence.

Selon un mode de réalisation, la section des canaux d'entrée et de sortie est hexadécagonale orthogonalement à l'axe X entre les extrémités ouverte et fermée de chaque canal, à l'exception de la section transversale de référence.

De préférence, pour chaque canal d'entrée et de sortie, la section carrée de l'extrémité ouverte est obtenue par homothétie d'un rapport k positif, de préférence k étant égal à racine de 2, et par rotation, de préférence d'un angle de 45°, de la section transversale de référence carrée.

De préférence, l'extrémité fermée des canaux d'entrée est située dans le corps du filtre à une distance *yₑ* de la face de sortie et lequel l'extrémité fermée des canaux de sortie est située dans le corps du filtre à une distance *yₛ* de la face d'entrée, les distances *yₑ* et *yₛ* étant comprises entre 1 et 50 fois l'épaisseur des parois.

Selon un mode de réalisation, la section transversale de référence de chaque canal d'entrée et de sortie est contenue dans un même plan de référence orthogonal à l'axe X, ledit plan de référence étant situé à mi-chemin entre la face d'entrée et la face de sortie.

Selon un mode de réalisation, le périmètre et la surface de la section des canaux évoluent de manière symétrique de part et d'autre de la section transversale de référence.

La section transversale de référence de chaque canal d'entrée et de sortie peut être contenue dans un même plan de référence orthogonal à l'axe X, ledit plan de référence étant plus proche de la face de sortie que de la face d'entrée.

Selon un mode de réalisation, les parois communes filtrantes séparant les canaux d'entrée et de sortie comprennent un revêtement catalytique pour le traitement d'au moins un composé contenu dans les gaz d'échappements choisi dans la liste constituée par: les hydrocarbures imbrûlés (HC), l'oxyde de carbone (CO), les oxydes d'azote (NOx), NH₃, SO₂, H₂S.

Selon un deuxième aspect,, la présente invention propose une méthode de fabrication d'un filtre à particules selon l'invention par stéréolithographie, dans laquelle on construit le corps du filtre par solidification d'un matériau poreux sous forme de couches successives au moyen d'un stéréolithographe qui reproduit un modèle 3D numérique préalablement établi dudit corps de filtre.

Selon un troisième aspect, la présente invention propose une méthode de fabrication d'un filtre à particules selon l'invention par impression 3D, dans laquelle on construit le corps du filtre par dépôt d'un matériau poreux sous forme de couches successives au moyen d'une imprimante 3D qui reproduit un modèle 3D numérique préalablement établi dudit corps de filtre.

Selon un quatrième aspect, la présente invention propose une méthode de fabrication d'un filtre à particules selon l'invention dans laquelle :
- on obtient par extrusion un corps de filtre en matériau poreux allongé selon un axe X, comportant une pluralité de canaux initiaux s'étendant parallèlement à l'axe X et de section constante carrée orthogonalement à l'axe X, et s'ouvrant à leurs deux extrémités sur la face d'entrée et la face de sortie dudit corps, et
- on déforme lesdits canaux initiaux en introduisant un outil pénétrant dans lesdits canaux initiaux par une de leurs extrémités sur chacune des faces d'entrée et de sortie, et jusqu'à un point D donné le long de l'axe X, au minimum jusqu'au milieu dudit corps, de manière à obtenir les canaux d'entrée et de sortie du filtre selon l'invention.

De préférence, l'outil pénétrant comporte un socle muni d'un ensemble de protrusions polyédriques allongées selon un même axe W, lesdites protrusions comportant une première base et une deuxième base carrées situées dans des plans parallèles, la première base étant en contact avec ledit socle, lesdites première et deuxième bases étant reliées par 4n facettes, n'étant un entier préférentiellement compris entre 2 et 4, de manière à ce que la section de la protrusion selon un plan orthogonal à l'axe W ait une forme de polygone convexe irrégulier d'ordre 4n évolutive, de préférence telle que le périmètre de ladite section de la protrusion décroît de manière continue depuis la première base jusqu'à la deuxième base en même temps que la surface de ladite section de la protrusion décroit de façon monotone depuis la première base jusqu'à la deuxième base, et l'outil pénétrant et le corps du filtre sont configurés de manière à ce que lorsque l'outil pénétrant est appliqué sur chacune des faces d'entrée et de sortie du corps du filtre, les protrusions pénètrent dans un canal sur deux sur chaque face selon un motif en damier.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

Les figures 1A et 1B, déjà décrites, sont de schémas représentant un filtre à particules selon l'art antérieur. La figure 1A est une vue partielle latérale du filtre selon l'art antérieur et la figure 1B est une vue partielle de face du filtre.
La figure 2 est une vue partielle de face d'un filtre à particules selon l'invention.
Les figures 3A, 3B, 3C, 3D, 3E, 3F et 3G illustrent un filtre selon un mode de réalisation à géométrie hexadécagonale. La figure 3A représente l'évolution de la section d'un canal de l'entrée vers la sortie du filtre. La figure 3D représente l'évolution de la section d'un canal de l'entrée jusqu'au milieu du filtre. Les figures 3B/3E, et 3C/3F sont des exemples de sections transversales du filtre, respectivement proche de l'entrée du filtre et à environ ¼ de la longueur du filtre à partir de l'entrée. La figure 3G est une vue partielle d'une coupe longitudinale de ce filtre.
La figure 4 est une vue latérale d'un exemple de protrusion d'un outil utilisé pour la fabrication du filtre à géométrie hexadécagonale par déformation des canaux.
Les figures 5A, 5B, 5C, 5D, 5E, 5F et 5G illustrent un filtre selon un mode de réalisation à géométrie dodécagonale. Les figures 5A et 5D représentent l'évolution de la section d'un canal de l'entrée du filtre jusqu'au milieu du filtre. Les figures 5B/5E et 5C/5F sont des exemples de sections transversales du filtre, respectivement proche de l'entrée du filtre et à environ ¼ de la longueur du filtre à partir de l'entrée. La figure 5G est une vue partielle d'une coupe longitudinale de ce filtre.
La figure 6 est une vue latérale d'un exemple de protrusion d'un outil utilisé pour la fabrication du filtre à géométrie dodécagonale par déformation des canaux.
Les figures 7A, 7B, 7C, 7D, 7E, 7F et 7G illustrent un filtre selon un mode de réalisation à géométrie octogonale. Les figures 7A et 7D représentent l'évolution de la section d'un canal de l'entrée du filtre jusqu'au milieu du filtre. Les figures 7B/7E et 7C/7F sont des exemples de sections transversales du filtre, respectivement proche de l'entrée du filtre et à environ ¼ de la longueur du filtre à partir de l'entrée. La figure 7G est une vue partielle d'une coupe longitudinale de ce filtre.
La figure 8 est une vue latérale d'un exemple de protrusion d'un outil utilisé pour la fabrication du filtre à géométrie octogonale par déformation des canaux.
La figure 9 est un diagramme illustrant l'évolution du périmètre de la section d'un canal du filtre de l'entrée vers la sortie du filtre, pour différentes géométries de canaux selon l'invention et pour un canal à section carrée selon l'art antérieur.
La figure 10 est un diagramme illustrant l'évolution de la surface de la section transversale d'un canal du filtre de l'entrée vers la sortie du filtre, pour différentes géométries de canaux selon l'invention et pour un canal à section carrée selon l'art antérieur.
La figure 11 est une vue latérale d'un canal selon un autre mode de réalisation d'un filtre à structure asymétrique.
La figure 12 est une vue latérale partielle d'un canal d'entrée entouré de quatre canaux de sortie du filtre asymétrique illustré à la figure 11.

Sur les figures, les mêmes références désignent des éléments identiques ou analogues.

### Description de l'invention

La présente invention propose un filtre à particules pour collecter les particules des gaz d'échappement d'un moteur à combustion interne, Diesel ou essence. Le filtre est ainsi typiquement utilisé en tant que dispositif de dépollution sur une ligne d'échappement d'un moteur à combustion interne.

En fonctionnement, le filtre permet de piéger les particules présentes dans les gaz d'échappement qui le traversent. Il peut également traiter certains composés de type hydrocarbures imbrûlés (HC), oxyde de carbone (CO) ou oxydes d'azote (NOx), ou par exemple l'ammoniac (NH3), le dioxyde de soufre (SO2), ou l'hydrogène sulfuré (H2S), contenus dans les gaz d'échappement, pour les transformer en composés moins nocifs, dans le cas où le filtre revêt une formulation catalytique.

Le filtre comporte un corps en matériau poreux allongé selon un axe X, qui correspond à l'axe découlement principal des gaz d'échappement dans le filtre. Le corps du filtre forme ainsi un monolithe, comportant une face d'entrée par laquelle les gaz d'échappement entrent dans le filtre et une face de sortie par laquelle les gaz d'échappement ressortent du filtre, comme cela est le cas pour le filtre de l'art antérieur représenté à la figure 1A.

Le corps du filtre comporte une pluralité de canaux d'entrée et de canaux de sortie qui s'étendent entre la face d'entrée et la face de sortie du filtre, parallèlement à l'axe X. Chaque canal d'entrée est séparé d'un canal de sortie adjacent par une paroi commune poreuse. Cette paroi filtrante permet le passage des gaz d'échappement d'un canal d'entrée à un canal de sortie. La pluralité de canaux forme une structure de type nid d'abeille, ainsi couramment désignée dans le domaine des filtres à particules. Les canaux sont en effet séparés par des cloisons communes à la manière d'un nid d'abeille.

Chaque canal d'entrée et de sortie comporte :
- une extrémité ouverte ayant une section transversale carrée selon un plan orthogonal à l'axe X,
- une extrémité fermée,
- une section transversale de référence de forme carrée selon un plan orthogonal à l'axe X, cette section étant située entre les deux extrémités du canal. De préférence la section de référence carrée se située à mi-chemin entre la face d'entrée et la face de sortie.

L'extrémité fermée a une section nulle. A proximité de cette extrémité fermée, dans la portion du canal située entre la section de référence et l'extrémité fermée, la section du canal a une forme sensiblement cruciforme selon un plan orthogonal à l'axe X.

Chacun des quatre sommets de la section de référence carrée est commun à deux canaux d'entrée et deux canaux de sortie. Les quatre sommets de la section de référence carrée ont une position inchangée quelle que soit la section du canal selon un plan orthogonal à l'axe X, autrement dit, chacun des quatre sommets forme une ligne sensiblement parallèle à l'axe X entre la face d'entrée et la face de sortie du filtre.

Ces quatre points sont mis en évidence dans les figures 2, 3A, 5A et 7A décrites plus loin, représentant l'évolution de la section d'un canal selon l'axe X pour différentes géométries de canaux de filtres selon l'invention.

Dans le reste de la description, on désignera par section transversale une section dans un plan orthogonal à l'axe X, à moins qu'il n'en soit spécifié autrement.

La face d'entrée du corps du filtre comporte les extrémités ouvertes contiguës des canaux d'entrée, formant un quadrillage. De même, la face de sortie du corps du filtre comporte les extrémités ouvertes contiguës des canaux de sortie, formant également un quadrillage.

Selon l'invention, la géométrie de chaque canal d'entrée et de sortie est non constante tout au long du canal selon l'axe X, telle que, pour chaque canal d'entrée et de sortie :
- le périmètre de la section du canal décroît de manière continue depuis l'extrémité ouverte du canal jusqu'à la section transversale de référence du canal, puis croit de manière continue de la section transversale de référence jusqu'à l'extrémité fermée, extrémité fermée exclue car le périmètre est nul à l'extrémité fermée, et
- la surface de la section du canal décroit de façon monotone selon l'axe X depuis l'extrémité ouverte du canal jusqu'à l'extrémité fermée où ladite surface est nulle, l'extrémité fermée du canal étant située dans le corps du filtre à proximité de face de sortie pour le canal d'entrée et étant située dans le corps du filtre à proximité de la face d'entrée pour le canal de sortie.

Les canaux d'entrée se ferment donc, de par cette géométrie spécifique, avant d"atteindre la face de sortie. De même, les canaux de sortie de ferment avant d'atteindre la face d'entrée du filtre. Le filtre selon l'invention peut ainsi s'affranchir de bouchons pour obturer l'une des extrémités des canaux. De préférence, l'extrémité fermée des canaux d'entrée est située dans le corps du filtre à une distance *yₑ* de la face de sortie comprise entre 1 et 50 fois l'épaisseur des parois. De même, l'extrémité fermée des canaux de sortie est située dans le corps du filtre à une distance *yₛ* de la face d'entrée comprise entre 1 et 50 fois l'épaisseur des parois.

La figure 2 est un schéma d'une vue partielle de la face d'entrée d'un exemple du filtre selon l'invention. La face d'entrée 40 est dans un plan YZ, orthogonal à l'axe X. En traits pleins sont représentées les ouvertures des canaux d'entrée 20, de section carrée, formant un quadrillage. Les sections carrées sont « posées » sur une pointe. L'épaisseur des parois limitant les canaux n'est pas représentée dans la figure. Les canaux d'entrée, d'ouverture 20 de section carrée, posée sur la pointe, se prolongent dans le corps du filtre selon l'axe X, et se ferment progressivement à proximité de la face de sortie du filtre. En traits pointillés sont représentées les sections transversales de référence des canaux d'entrée. A quatre ouvertures de section carrée sur la face d'entrée correspondent 4 sections transversales carrées 21 (représentées en gris). Les sections carrées des extrémités ouvertes sont obtenues par rotation, par exemple d'un angle de 45° comme représenté, et par homothétie d'un rapport k positif, par exemple racine de 2 comme représenté, de la section transversale de référence carrée 21. Les extrémités fermées des canaux d'entrée ne sont pas représentées dans la figure. Les sommets 23 des sections de référence carrée ont une position inchangée quelle que soit la section du canal selon un plan orthogonal à l'axe X. Quelle que soit la géométrie des canaux du filtre selon l'invention, cette figure particulière des sommets de la section de référence carrée invariants selon X est présente. La face de sortie du filtre est constituée de la même manière, avec les ouvertures des canaux de sortie, et peut être schématisée comme sur la figure 2. Pour chaque canal d'entrée et de sortie, la section carrée de l'extrémité ouverte est obtenue par homothétie d'un rapport k positif, de préférence k étant égal à racine de 2, et par rotation, de préférence d'un angle de 45°, de la section transversale de référence carrée.

Les faces d'entrée et de sortie ne sont formées que des ouvertures respectivement des canaux d'entrée et de sortie qui sont contigües et qui forment un quadrillage. De cette manière, le filtre selon l'invention offre une surface frontale ouverte OFA (pour « Open Frontal Area » en anglais) optimisée par rapport à un filtre de l'art antérieur, par exemple tel que représenté aux figures 1A et 1B. L'OFA, définie par le rapport entre surface ouverte et surface totale d'entrée du filtre et s'exprimant en %, est fonction de l'épaisseur des parois, de la taille des cellules et de la densité de cellules. Alors que dans l'art antérieur les valeurs communément rencontrées s'échelonnent entre 30 et 45 %, le filtre selon la présente invention peut présenter une OFA supérieure à 50%, de préférence comprise entre 50 et 90%, plus préférentiellement comprise entre 60% et 90 %, et encore plus préférentiellement comprise entre 70% et 85%.

Grâce à cette géométrie particulière des canaux, le filtre selon l'invention présente une surface de filtration importante, comparativement aux filtres de l'art antérieur connus ayant un nombre de canaux et un encombrement (volume) similaires, permettant d'améliorer le taux de captation des particules. En effet, l'augmentation de la surface de filtration s'accompagne d'une réduction de vitesse des gaz d'échappement au travers des parois qui améliore le taux de captation des particules par le filtre, et diminue les risques de réentrainement des particules captées. L'efficacité du filtre est donc améliorée.

L'augmentation de la surface de filtration des particules réduit également la perte de charge, aussi appelée contre-pression d'échappement. En effet, la perte de charge est fonction de la vitesse de gaz, et la vitesse diminuant avec l'augmentation de la surface de filtration, la perte de charge diminue également.

En outre, l'absence de bouchons et l'importante surface frontale ouverte (OFA) du filtre selon l'invention participent à réduire la contre-pression générée lors du fonctionnement du filtre.

Dans un fonctionnement classique d'un filtre à particules, lorsque la contre pression excède une certaine valeur, ce qui peut être le cas lorsque le filtre est encrassé par une accumulation importante de particules, une phase de régénération du filtre doit être lancée. Ainsi, en limitant la perte de charge, la présente invention peut permettre d'espacer les phases de régénération du filtre.

La réduction de la perte de charge dans le filtre en fonctionnement améliore également l'efficacité du moteur. En effet, dans la ligne d'échappement d'un moteur à combustion interne, le simple fait d'introduire un filtre à particules a pour effet d'augmenter la perte de charge. La perte de charge augmente avec le colmatage progressif du filtre dû au dépôt de particules dans celui-ci. La perte de charge se traduit par une augmentation de la consommation du moteur, pouvant aller jusqu'à la détérioration de celui-ci en cas de surpression. Ainsi, limiter la perte de charge liée à l'utilisation d'un filtre à particules permet d'éviter une surconsommation du moteur voire d'endommager celui-ci.

Dans le filtre selon l'invention, tous les canaux d'entrée ont une géométrie identique. Il en va de même pour tous les canaux de sortie.

Selon un mode de réalisation, la section transversale de référence de chaque canal d'entrée et de sortie est contenue dans un même plan de référence orthogonal à l'axe X, le plan de référence étant situé à mi-chemin entre la face d'entrée et la face de sortie.

Le périmètre et la surface de la section des canaux évoluent de préférence de manière symétrique de part et d'autre de la section transversale de référence. C'est par exemple le cas lorsque le plan de référence est situé à mi-chemin entre la face d'entrée et la face de sortie.

De préférence, le matériau poreux constituant le corps du filtre comprend au moins l'un des matériaux céramiques suivants : cordiérite, carbure de silicium, titanate d'aluminium. Cette liste de matériaux n'est pas limitative, et le corps du filtre selon l'invention peut être formé par tout matériau adapté à l'utilisation du filtre à particules, c'est-à-dire tout matériau de porosité adaptée à laisser passer les gaz d'échappement tout en retenant la plus grande partie des particules, et de propriétés physico-chimiques telles que le filtre peut résister aux contraintes thermomécaniques et chimiques liées à son usage dans une ligne d'échappement d'un moteur à combustion interne. Le matériau doit aussi être adapté aux procédés de fabrication du filtre tels que décrits plus loin.

Plusieurs géométries de canaux répondent à la définition de géométrie évolutive particulière des canaux le long du filtre selon l'invention.

De préférence, chaque canal d'entrée et de sortie a une section polygonale d'ordre 4n selon tout plan orthogonal à l'axe X entre l'extrémité ouverte et la section transversale de référence d'une part, et entre la section transversale de référence et l'extrémité fermée d'autre part, n'étant un entier compris préférentiellement entre 2 et 4.

La section polygonale d'ordre 4n forme de préférence un polygone convexe entre l'extrémité ouverte et la section transversale de référence, et est de préférence un polygone concave entre la section transversale de référence et l'extrémité fermée.

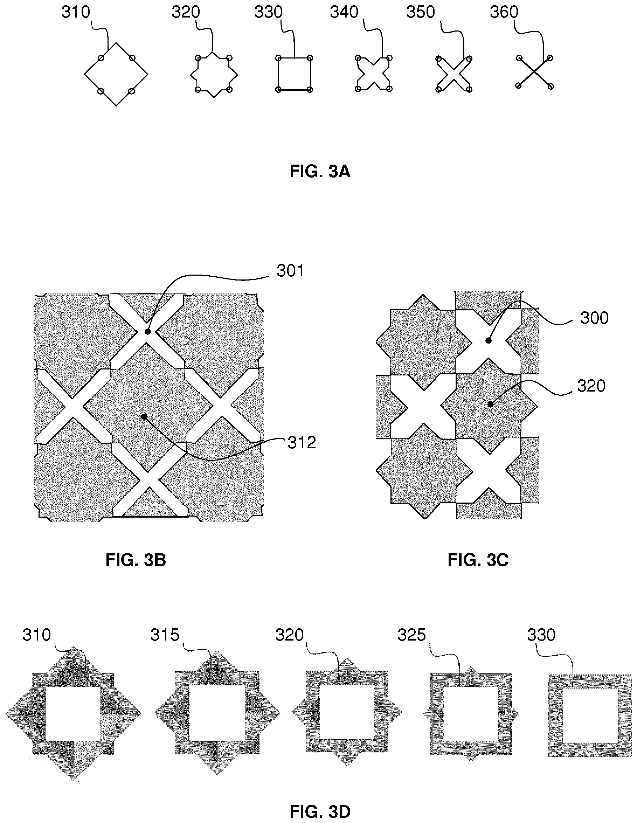

Selon un mode de réalisation préféré, représenté aux figures 3A, 3B et 3C, le filtre comporte des canaux à géométrie hexadécagonale évolutive.

Selon ce mode de réalisation, la section des canaux d'entrée et de sortie est hexadécagonale (polygone d'ordre 16) selon tout plan orthogonal à l'axe X entre les extrémités ouverte et fermée de chaque canal, à l'exception de la section transversale de référence. Un tel filtre présente une plus grande surface de filtration comparativement aux autre géométries selon l'invention comportant des sections polygonales d'ordre plus petit.

De préférence, la section a la forme d'un polygone convexe entre l'extrémité ouverte et la section transversale de référence, et la forme d'un polygone concave entre la section transversale de référence et l'extrémité fermée.

La figure 3A illustre l'évolution de la section transversale d'un canal d'entrée selon ce mode de réalisation, depuis son extrémité ouverte vers son extrémité fermée. La section 310 correspond à la section d'entrée carrée, posée sur la pointe. La section 330 correspond à la section transversale de référence carrée, de préférence située à mi-chemin entre les faces d'entrée et de sortie du corps de filtre. Les quatre sommets invariants de la section transversale de référence carrée 330 sont représentés sur chaque section 310 à 360. Par exemple la section de l'extrémité ouverte 310 est obtenue par rotation, de préférence de 45°, et par homothétie avec un rapport k positif, de la section de référence 330. La section 320 est une section intermédiaire entre la section 310 et la section 330, par exemple à une distance d'environ ¼ de la longueur du filtre en partant de la face d'entrée. La section 350 est une section du canal à proximité de la face de sortie du filtre. La section 340 est une section intermédiaire entre la section de référence 330 et la section 350, par exemple à une distance d'environ ¾ de la longueur du filtre en partant de la face d'entrée. Enfin la section 360 illustre une section du canal juste avant la fermeture de celui-ci, ayant une forme sensiblement cruciforme.

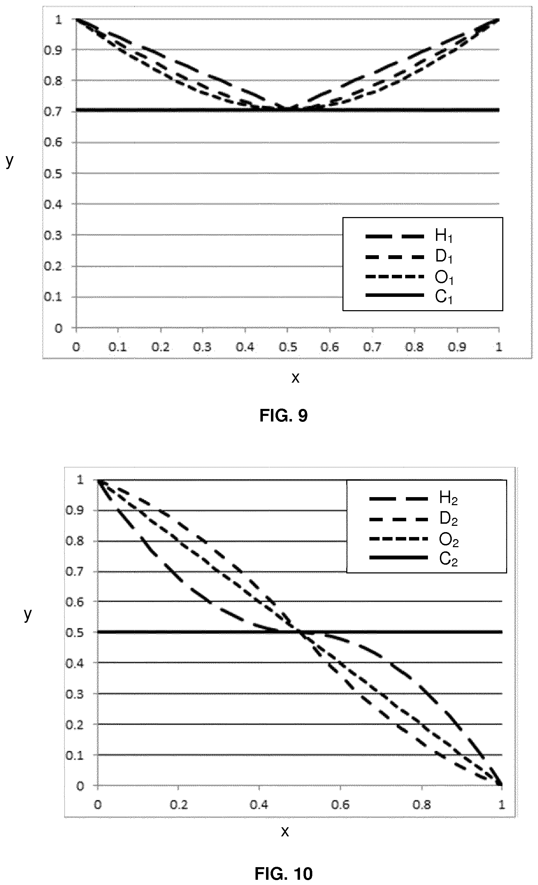

On voit que le périmètre de la section décroît de l'extrémité ouverte 310 jusqu'à la position de la section transversale de référence 330, puis croît à nouveau, de manière symétrique, de la section de référence 330 jusqu'à l'extrémité fermée où le périmètre est nul. Cette évolution du périmètre est également illustrée dans le graphique de la figure 9 avec la courbe en pointillé notée H₁. En abscisse x est représentée la distance depuis l'entrée du filtre (origine) vers la sortie du filtre, et en ordonnée est représenté le périmètre de la section du canal. Les valeurs sont exprimées sans dimensions. Le graphique a été construit pour un filtre avec des canaux de section de référence carrée de côté 1,27 mm. A titre comparatif, il a été reporté la courbe C₁ en trait plein représentant le périmètre de la section d'un canal à section carrée constante tout au long du canal (section carrée de côté 1.27 mm). Selon l'exemple illustré à la figure 9, la section de référence est située à mi-chemin entre les faces d'entrée et de sortie. Sur cette figure le périmètre à l'extrémité fermée, qui est nul, n'est pas représenté. Le canal de sortie évolue de la même manière depuis la face de sortie, qui serait dans ce cas l'origine du graphique, vers la face d'entrée du filtre.

On voit également que la surface de la section décroit de façon monotone selon l'axe X depuis l'extrémité ouverte 310 du canal jusqu'à l'extrémité fermée 360 où ladite surface est nulle. L'évolution de la surface de la section du canal le long du canal est également représentée dans le graphique de la figure 10 avec la courbe en pointillé notée H₂. En abscisse x est représentée la distance depuis l'entrée du filtre (origine) vers la sortie du filtre, et en ordonnée est représentée la surface de la section du canal. Les valeurs sont exprimées sans dimensions. Le graphique a été construit pour un filtre avec des canaux de section de référence carrée de côté 1,27 mm. A titre comparatif, il a été reporté la courbe C₂ en trait plein représentant l'évolution de la surface de la section d'un canal à section carrée constante tout au long du canal (section carrée de côté 1.27 mm). Selon l'exemple illustré à la figure 10, la section de référence est située à mi-chemin entre les faces d'entrée et de sortie. Le canal de sortie évolue de la même manière depuis la face de sortie, qui serait dans ce cas l'origine du graphique, vers la face d'entrée du filtre.

La figure 3D illustre comme la figure 3A l'évolution de la section transversale d'un canal d'entrée du filtre, mais cette fois sous forme de vues de face du canal coupé dans un plan orthogonal à l'axe X, avec une représentation de l'épaisseur des parois, et depuis son extrémité ouverte jusqu'à la section transversale de référence. Les sections 310, 320 et 330 sont les mêmes que celles décrites en relation avec la figure 3A. La section 315 est à mi-chemin entre la section de l'extrémité ouverte 310 et la section 320, de même que la section 325 qui est à mi-chemin entre la section 320 et la section de référence 330.

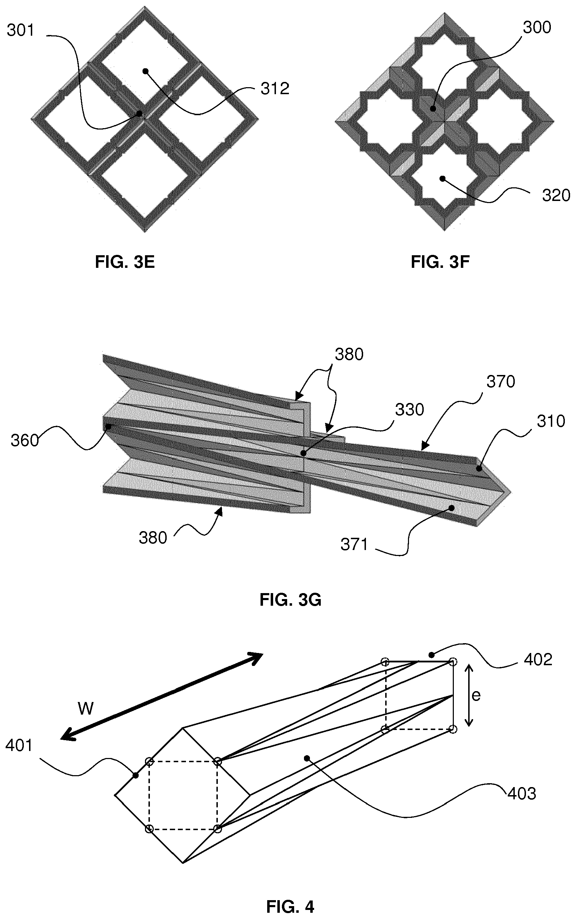

Les figures 3B et 3C sont des coupes schématiques transversales partielles du filtre à géométrie hexadécagonale évolutive. Les figures 3E et 3F sont similaires aux figures 3B et 3C, à cela près que l'épaisseur des parois des canaux est représentée. Les figures 3B et 3E correspondent à des coupes réalisées proches de l'entrée du filtre, montrant les sections des canaux d'entrée 312 et celles des canaux de sortie 301, de formes complémentaires. Les figures 3C et 3F correspondent à des coupes réalisées entre la face d'entrée du filtre et la section de référence, par exemple à environ ¼ de la longueur du filtre à partir de la face d'entrée, montrant les sections des canaux d'entrée 320 et celles des canaux de sortie 300, de formes complémentaires. Le périmètre et la surface de la section du canal d'entrée 312 sont plus importantes que le périmètre et la surface de la section 320.

La figure 3G est une vue partielle d'une coupe longitudinale du filtre selon ce mode de réalisation à géométrie hexadécagonale évolutive le long de l'axe X, où l'on voit un canal d'entrée 370 représentée entouré de quatre canaux de sortie 380. Le canal d'entrée 370 comporte une extrémité ouverte de section carrée 310 sur la face d'entrée du corps du filtre. Le canal 370 se ferme à son autre extrémité 360 avant d'atteindre la face de sortie du corps du filtre. La paroi qui sépare le canal 370 avec les canaux adjacents comporte 16 facettes 371 formant en section transversale un hexadécagone, excepté aux extrémités ouverte 310, fermée 360 et au niveau de la section transversale de référence carrée 330.

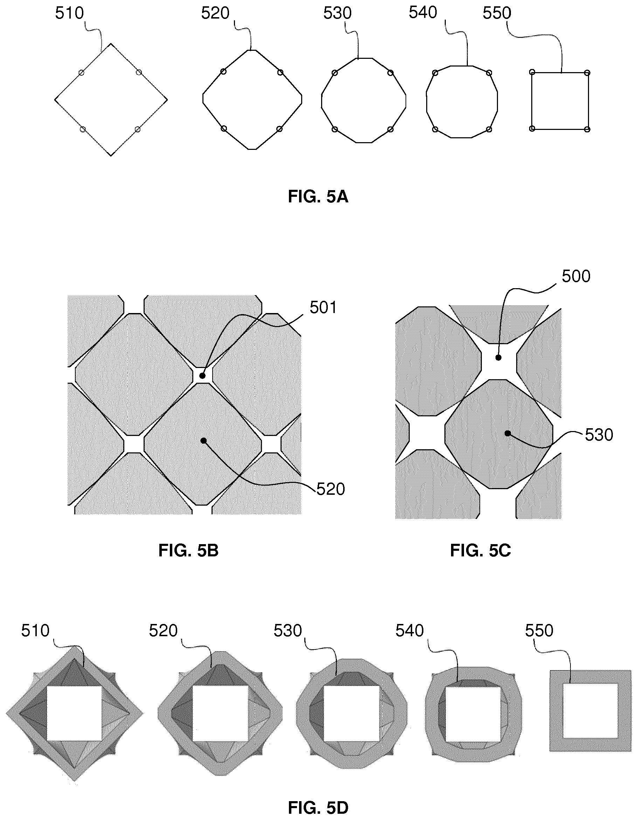

Selon un autre mode de réalisation, représenté aux figures 5A, 5B et 5C, le filtre comporte des canaux à géométrie dodécagonale évolutive.

Selon ce mode de réalisation, la section des canaux d'entrée et de sortie est dodécagonale (polygone d'ordre 12) selon tout plan orthogonal à l'axe X entre les extrémités ouverte et fermée de chaque canal, à l'exception de la section transversale de référence.

La section a de préférence la forme d'un polygone convexe entre l'extrémité ouverte et la section transversale de référence, et la forme d'un polygone concave entre la section transversale de référence et l'extrémité fermée.

La figure 5A illustre l'évolution de la section transversale d'un canal d'entrée selon ce mode de réalisation, depuis son extrémité ouverte jusqu'à la section transversale de référence. La section 510 correspond à la section d'entrée carrée, posée sur la pointe. La section 550 correspond à la section transversale de référence carrée, de préférence située à mi-chemin entre les faces d'entrée et de sortie du corps de filtre. Les 4 sommets invariants de la section transversale de référence carrée 550 sont représentés sur chaque section représentée 510, 520, 530, 540 et 550. Par exemple la section de l'extrémité ouverte 510 est obtenue par rotation, de préférence de 45°, et par homothétie avec un rapport k positif, de la section de référence 550. Les sections 520, 530, et 540 sont des sections intermédiaires entre la section de l'extrémité ouverte 510 et la section de référence 550, par exemple à intervalles réguliers entre la face d'entrée du filtre et la section de référence d'un canal.

On voit que le périmètre de la section décroît de l'extrémité ouverte 510 jusqu'à la position de la section transversale de référence 550. L'évolution depuis la section de référence jusqu'à l'extrémité fermée du canal n'est pas illustrée. L'évolution du périmètre est également montrée dans le graphique de la figure 9, sur toute la longueur du canal cette fois, avec la courbe en pointillé notée D₁. En abscisse x est représentée la distance depuis l'entrée du filtre (origine) vers la sortie du filtre, et en ordonnée est représenté le périmètre de la section du canal. Les valeurs sont exprimées sans dimensions. Le graphique a été construit pour un filtre avec des canaux de section de référence carrée de côté 1,27 mm. Selon l'exemple illustré à la figure 9, la section de référence est située à mi-chemin entre les faces d'entrée et de sortie. Sur la figure 9, le périmètre à l'extrémité fermée, qui est nul, n'est pas représenté. Le canal de sortie évolue de la même manière depuis la face de sortie, qui serait dans ce cas l'origine du graphique, vers la face d'entrée du filtre.

On voit également que la surface de la section décroit de façon monotone selon l'axe X depuis l'extrémité ouverte 510 du canal jusqu'à la position de la section transversale de référence 550. L'évolution de la surface de la section du canal le long du canal est également représentée dans le graphique de la figure 10 avec la courbe en pointillé notée D₂. En abscisse x est représentée la distance depuis l'entrée du filtre (origine) vers la sortie du filtre, et en ordonnée est représentée la surface de la section du canal. Les valeurs sont exprimées sans dimensions. Le graphique a été construit pour un filtre avec des canaux de section de référence carrée de côté 1,27 mm. Selon l'exemple illustré à la figure 10, la section de référence est située à mi-chemin entre les faces d'entrée et de sortie. Le canal de sortie évolue de la même manière depuis la face de sortie, qui serait dans ce cas l'origine du graphique, vers la face d'entrée du filtre.

La figure 5D illustre comme la figure 5A l'évolution de la section transversale d'un canal d'entrée du filtre, mais cette fois sous forme de vues de face du canal coupé dans un plan orthogonal à l'axe X, avec une représentation de l'épaisseur des parois. Les mêmes références que celles de la figure 5A sont utilisées pour représentées les sections similaires.

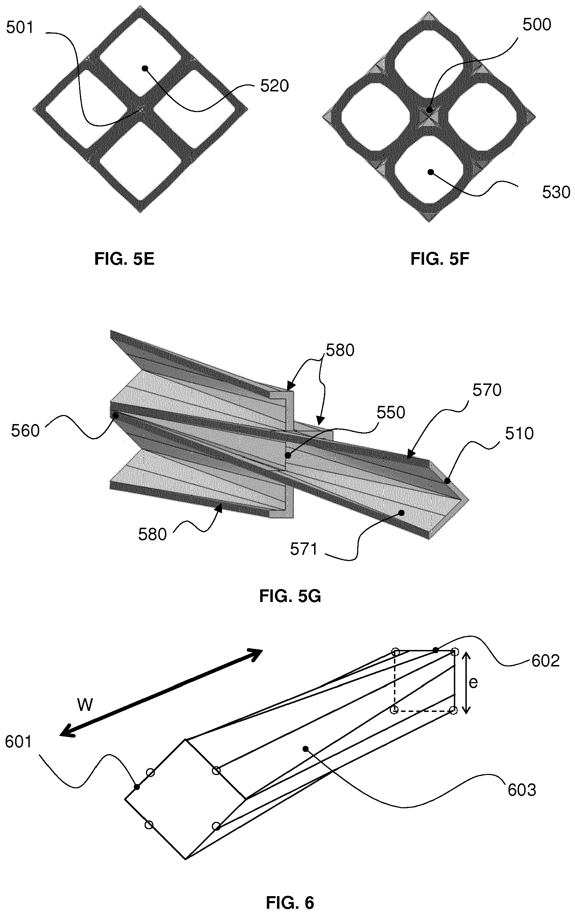

Les figures 5B et 5C sont des coupes schématiques transversales partielles du filtre à géométrie dodécagonale évolutive. Les figures 5E et 5F sont similaires aux figures 3B et 3C, à cela près que l'épaisseur des parois des canaux est représentée. Les figures 5B et 5E correspondent à des coupes réalisées proches de l'entrée du filtre, montrant les sections dodécagonales des canaux d'entrée 520 et celles des canaux de sortie 501, de formes complémentaires. Les figures 5C et 5F correspondent à des coupes réalisées entre la face d'entrée du filtre et la section de référence, par exemple à mi-chemin entre la face d'entrée et la section de référence, montrant les sections dodécagonales des canaux d'entrée 530 et celles des canaux de sortie 500, de formes complémentaires. Le périmètre et la surface de la section du canal d'entrée 520 sont plus importantes que le périmètre et la surface de la section du canal d'entrée 530.

La figure 5G est une vue partielle d'une coupe longitudinale du filtre selon ce mode de réalisation à géométrie dodécagonale évolutive le long de l'axe X, où l'on voit un canal d'entrée 570 représentée entouré de quatre canaux de sortie 580. Le canal d'entrée 570 comporte une extrémité ouverte de section carrée 510 sur la face d'entrée du corps du filtre. Le canal 570 se ferme à son autre extrémité 560 avant d'atteindre la face de sortie du corps du filtre. La paroi qui sépare le canal 570 avec les canaux adjacents comporte 12 facettes 571 formant en section transversale un hexadécagone, excepté aux extrémités ouverte 510, fermée 560 et au niveau de la section transversale de référence carrée 550.

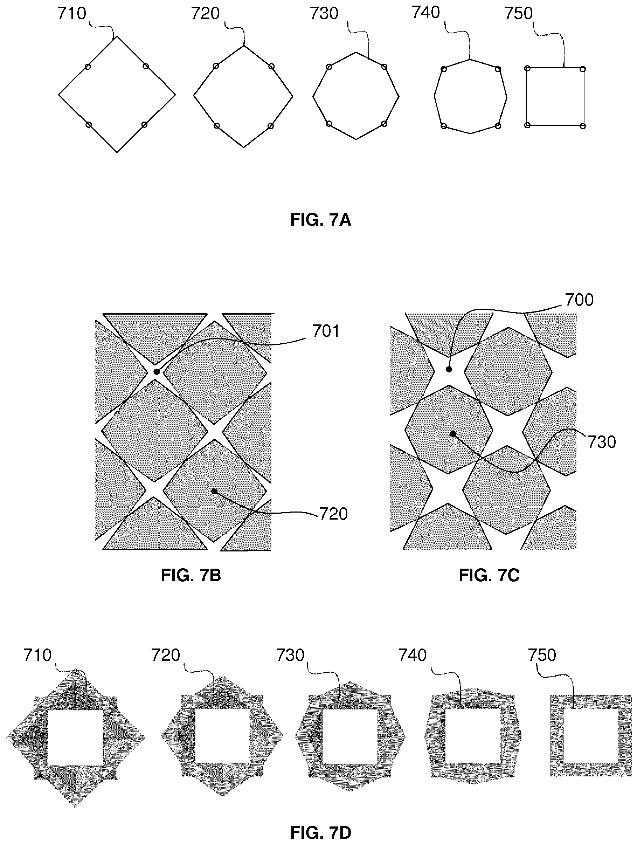

Selon un autre mode de réalisation, représenté aux figures 7A, 7B et 7C, le filtre comporte des canaux à géométrie octogonale évolutive.

Le filtre est identique à celui décrit en relation avec les figures 5A à 5C, excepté que les canaux ont des sections octogonales (polygone d'ordre 8) dans un plan orthogonal à l'axe X entre les extrémités ouverte et fermée de chaque canal, mise à part la section transversale de référence qui est carrée.

La section a de préférence la forme d'un polygone convexe entre l'extrémité ouverte et la section transversale de référence, et la forme d'un polygone concave entre la section transversale de référence et l'extrémité fermée.

Les sections 710, 720, 730, 740 et 750 de la figure 7A sont équivalentes aux sections de la figure 5A pour une géométrie octogonale, illustrant l'évolution de la section transversale d'un canal d'entrée depuis son extrémité ouverte jusqu'à la section transversale de référence. La description du filtre en relation avec la figure 7A est similaire à celle de la figure 5A, mise à part la forme de la section qui est octogonale au lieu d'être dodécagonale, et n'est pas répétée ici.

La figure 7D illustre comme la figure 7A l'évolution de la section transversale d'un canal d'entrée du filtre, mais cette fois sous forme de vues de face du canal coupé dans un plan orthogonal à l'axe X, avec une représentation de l'épaisseur des parois. Les mêmes références que celles de la figure 7A sont utilisées pour représentées les sections similaires.

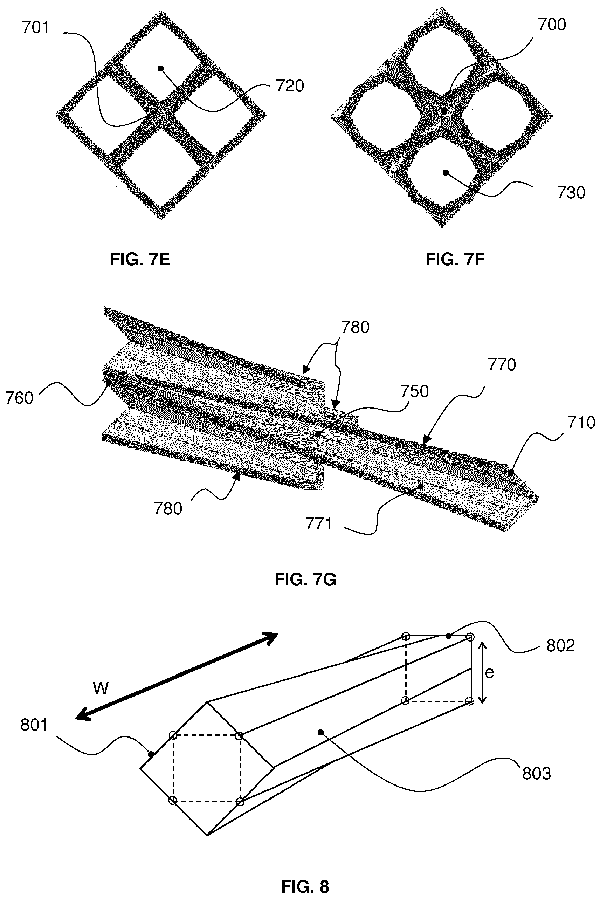

Il en va de même pour les figures 7B/7E et 7C/7F. Les coupes schématiques transversales partielles du filtre selon ces figures peuvent être décrites de la même manière que celles des figures 5B/5E et 5C/5F, à l'exception près que les sections des canaux d'entrée et de sortie ont une forme octogonale qui évolue selon l'axe X alors que dans les figures 5B/5E et 5C/5F il s'agit d'une géométrie dodécagonale. Les sections des canaux d'entrée 720 et 730 ont une forme complémentaire à celle respectivement des sections de canaux de sortie 701 et 700.

Sur les figures 9 et 10, on peut également voir l'évolution respectivement du périmètre et de la surface de la section d'un canal d'entrée, avec les courbes en pointillé notées O₁. On constate que le périmètre de la section décroît de l'extrémité ouverte (710 dans la figure 7A) jusqu'à la position de la section transversale de référence (750 dans la figure 7A), puis croît à nouveau, de manière symétrique, de la section de référence jusqu'à l'extrémité fermée où le périmètre est nul (périmètre nul non représenté). On voit également que la surface de la section décroit de façon monotone selon l'axe X depuis l'extrémité ouverte du canal jusqu'à la position de la section transversale de référence, puis jusqu'à l'extrémité fermée du canal (surface nulle). Les courbes O₁ ont été construites pour un filtre avec des canaux de section de référence carrée de côté 1,27 mm. Le canal de sortie évolue de la même manière depuis la face de sortie, qui serait dans ce cas l'origine du graphique, vers la face d'entrée du filtre.

La figure 7G est une vue partielle d'une coupe longitudinale du filtre selon ce mode de réalisation à géométrie octogonale évolutive le long de l'axe X, où l'on voit un canal d'entrée 770 représentée entouré de quatre canaux de sortie 780. Le canal d'entrée 770 comporte une extrémité ouverte de section carrée 710 sur la face d'entrée du corps du filtre. Le canal 770 se ferme à son autre extrémité 760 avant d'atteindre la face de sortie du corps du filtre. La paroi qui sépare le canal 770 avec les canaux adjacents comporte 8 facettes 771 formant en section transversale un hexadécagone, excepté aux extrémités ouverte 710, fermée 760 et au niveau de la section transversale de référence carrée 750.

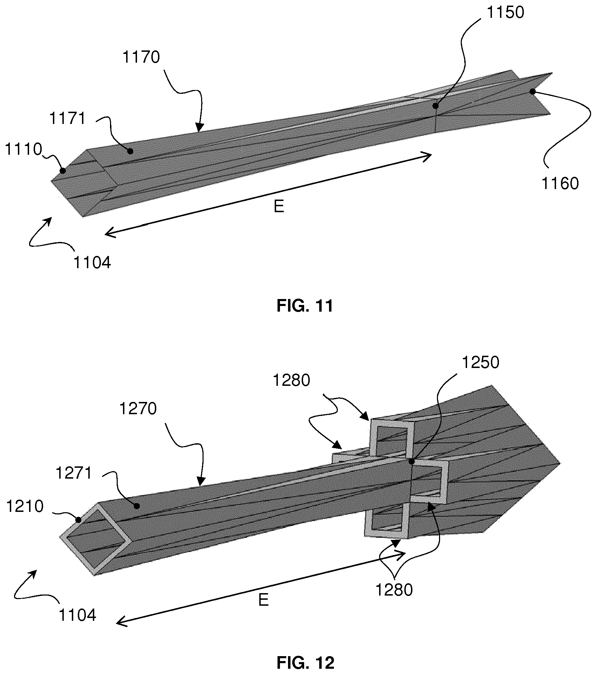

La figure 11 représente un canal 1170 d'un filtre selon un autre mode de réalisation de l'invention, dans lequel le filtre présente une structure asymétrique : la section de référence 1150 du canal n'est pas située à mi-chemin entre la face d'entrée et la face de sortie du corps du filtre, mais se situe à une distance E donnée de la face d'entrée 1104 du corps du filtre. Dans ce mode de réalisation, le périmètre et la surface de la section transversale des canaux n'évoluent pas de manière symétrique de part et d'autre de la section de référence. Bien que le canal 1170 représenté à la figure 11 est à géométrie hexadécagonale évolutive selon l'axe X, ce mode de réalisation asymétrique peut comporter d'autres géométries telles que décrites plus haut. La paroi qui sépare le canal 1170 avec les canaux adjacents (non représentés) comporte ainsi 16 facettes 1171 formant en section transversale un hexadécagone, excepté aux extrémités ouverte 1110, fermée 1160 et au niveau de la section transversale de référence carrée 1150. Ce mode de réalisation permet de créer une asymétrie entre les canaux d'entrée et de sortie, notamment d'augmenter le volume global créé par les canaux d'entrée relativement à celui créé par les canaux de sortie de façon à conserver un important volume de canaux d'entrée même lorsque le filtre se charge de particules ou de résidus de leur combustion (cendres) et d'ainsi réduire la perte de charge générée.

La figure 12 illustre le même mode de réalisation que celui représenté à la figure 11, à cela près que sont représentés un canal d'entrée 1270 avec les 4 canaux de sortie 1280 adjacents, ainsi que l'épaisseur des parois des canaux. Le canal d'entrée 1270 présente une géométrie hexadécagonale évolutive selon l'axe X, avec une paroi qui le sépare des canaux adjacents 1280 comportant ainsi 16 facettes 1271 formant en section transversale un hexadécagone, excepté aux extrémités ouverte 1210, fermée (non visible sur la vue) et au niveau de la section transversale de référence carrée 1250.

Sans sortie du cadre de la présente invention, le filtre peut comporter des canaux comprenant des parois courbes, à la manière des filtres décrits dans les demandes de brevets FR2959673 et FR2912069. Dans ce cas, les sections transversales des canaux ont des formes de polygone déformés avec des segments entre les sommets qui sont courbes, avec pour chaque segment un point de courbure ou plusieurs points de courbure (ondulations). Il est ainsi possible de créer une asymétrie entre les canaux d'entrée et de sortie, par exemple avec des canaux d'entrée dont les sections transversales présentent des segments concaves et des canaux de sortie dont les sections transversales ont une forme complémentaire avec des segments convexes. Une telle géométrie de canaux permet notamment d'augmenter le volume global créé par les canaux d'entrée relativement à celui créé par les canaux de sortie de façon à conserver un important volume de canaux d'entrée même lorsque le filtre se charge de particules ou de résidus de leur combustion (cendres) et d'ainsi réduire la perte de charge générée.

Selon un autre aspect, l'invention propose de fournir une méthode de fabrication du filtre décrit.

Les géométries particulières détaillées ci-dessus peuvent être obtenues selon différentes méthode de fabrication.

Une première méthode de fabrication du filtre est une méthode de fabrication additive reposant sur une technique d'impression 3D particulière qui est la stéréolithographie. Selon cette méthode, on construit le corps du filtre par solidification d'un matériau poreux sous forme de couches successives au moyen d'un stéréolithographe qui reproduit un modèle 3D numérique préalablement établi dudit corps de filtre.

La stéréolithographie est une technique bien connue, pour le prototypage rapide. Cette technique peut avantageusement être appliquée à la fabrication du filtre selon l'invention qui présente une géométrie complexe des canaux.

Selon une autre méthode de fabrication, on fabrique le filtre selon l'invention selon une technologie d'impression 3D, dans laquelle on construit le corps du filtre par dépôt d'un matériau poreux sous forme de couches successives au moyen d'une imprimante 3D qui reproduit un modèle 3D numérique préalablement établit dudit corps de filtre.

La technique d'impression 3D, mettant en oeuvre le dépôt d'un matériau, typiquement présenté sous forme de bobine, et passant à travers une buse d'extrusion chauffée, est également largement connue dans le domaine industriel.

De telles méthode de fabrication par impression 3D (stéréolithographie ou impression 3D par dépôt de matière) sont plus simples à mettre en oeuvre que les méthode de fabrication de filtre par extrusion comportant des étapes d'obturation des canaux par réalisation d'un bouchon et/ou déformation des canaux, et permettent également d'atteindre une plus grande précision dans la structure du filtre fabriqué.

Une troisième méthode de fabrication consiste à déformer des canaux, sur le principe de fabrication décrit dans la demande de brevet WO9422556, mais en utilisant un outil spécifique pénétrant par les faces d'entrée et de sortie du filtre à particules.

Cette méthode de fabrication comprend les étapes suivantes :
- on obtient par extrusion un corps de filtre en matériau poreux, allongé selon un axe X, et comportant une pluralité de canaux initiaux s'étendant parallèlement à l'axe X et de section constante carrée orthogonalement à l'axe X, et s'ouvrant à leurs deux extrémités sur la face d'entrée et la face de sortie dudit corps, et
- on déforme les canaux initiaux en introduisant un outil pénétrant dans les canaux initiaux par une de leurs extrémités sur chacune des faces d'entrée et de sortie, et jusqu'à un point D donné le long de l'axe X, a minima jusqu'au milieu dudit corps, de manière à obtenir les canaux d'entrée et de sortie du filtre selon l'invention, à géométrie polygonale évolutive.

L'outil pénétrant comporte de préférence un socle muni d'un ensemble de protrusions polyédriques allongées selon un même axe W. Les protrusions comportent une première base et une deuxième base carrées situées dans des plans parallèles, la première base étant en contact avec le socle, les première et deuxième bases étant reliées par 4n facettes, n'étant un entier compris préférentiellement entre 2 et 4, de manière à ce que la section de la protrusion selon un plan orthogonal à l'axe W ait une forme de polygone convexe d'ordre 4n évolutive, de préférence telle que le périmètre de la section de la protrusion décroît de manière continue depuis la première base jusqu'à la deuxième base en même temps que la surface de ladite section de la protrusion décroit de façon monotone depuis la première base jusqu'à la deuxième base.

L'outil pénétrant et le corps du filtre sont configurés de manière à ce que lorsque l'outil pénétrant est appliqué sur chacune des faces d'entrée et de sortie du corps du filtre, les protrusions pénètrent dans un canal sur deux sur chaque face selon un motif en damier.

Dans le cas d'un filtre à géométrie hexadécagonale évolutive, tel qu'illustré aux figures 3A à 3G, la géométrie des canaux peut être obtenue par déformation d'une structure initiale comportant des canaux de section carrée tel que représentés aux figures 1A et 1B, ouverts sur chaque face du filtre, à l'aide d'un outil pénétrant dont une protrusion est illustrée à la figure 4. La protrusion polyédrique à 16 faces est allongée selon l'axe W, et comporte une première base carrée 401 et une deuxième base carrée 402 situées dans des plans parallèles. La première base 401 est en contact avec un socle (non représenté). Les bases carrées 401 et 402 sont reliées par 16 facettes 403 de manière à ce que la section de la protrusion selon un plan orthogonal à l'axe W ait une forme de polygone convexe irrégulier d'ordre 16 évolutive (4 x n avec n égal à 4), de préférence telle que le périmètre de la section de la protrusion décroît de manière continue depuis la première base 401 jusqu'à la deuxième base 402 en même temps que la surface de ladite section de la protrusion décroit de façon monotone depuis la première base 401 jusqu'à la deuxième base 402.

Dans le cas d'un filtre à géométrie dodécagonale évolutive, tel qu'illustré aux figures 5A à 5G, la géométrie des canaux peut être obtenue par déformation d'une structure initiale comportant des canaux de section carrée tel que représentés aux figures 1A et 1B, ouverts sur chaque face du filtre, à l'aide d'un outil pénétrant dont une protrusion est illustrée à la figure 6. La protrusion polyédrique à 12 faces est allongée selon l'axe W, et comporte une première base carrée 601 et une deuxième base carrée 602 situées dans des plans parallèles. La première base 601 est en contact avec un socle (non représenté). Les bases carrées 601 et 602 sont reliées par 12 facettes 603 de manière à ce que la section de la protrusion selon un plan orthogonal à l'axe W ait une forme de polygone convexe irrégulier d'ordre 12 évolutive (4 x n avec n égal à 2), de préférence telle que le périmètre de la section de la protrusion décroît de manière continue depuis la première base 601 jusqu'à la deuxième base 602 en même temps que la surface de ladite section de la protrusion décroit de façon monotone depuis la première base 601 jusqu'à la deuxième base 602.

Dans le cas d'un filtre à géométrie octogonale évolutive, tel qu'illustré aux figures 7A à 7G, la géométrie des canaux peut être obtenue par déformation d'une structure initiale comportant des canaux de section carrée tel que représentés aux figures 1A et 1B, ouverts sur chaque face du filtre, à l'aide d'un outil pénétrant dont une protrusion est illustrée à la figure 8. La protrusion polyédrique à 8 faces est allongée selon l'axe W, et comporte une première base carrée 801 et une deuxième base carrée 802 situées dans des plans parallèles. La première base 801 est en contact avec un socle (non représenté). Les bases carrées 801 et 802 sont reliées par 8 facettes 803 de manière à ce que la section de la protrusion selon un plan orthogonal à l'axe W ait une forme de polygone convexe irrégulier d'ordre 8 évolutive (4 x n avec n égal à 1), de préférence telle que le périmètre de la section de la protrusion décroît de manière continue depuis la première base 801 jusqu'à la deuxième base 802 en même temps que la surface de ladite section de la protrusion décroit de façon monotone depuis la première base 801 jusqu'à la deuxième base 802.

Les outils pénétrants comportant les protrusions à géométrie polygonale évolutives telles que décrites peuvent être fabriqués par différents procédés : moulage, usinage, impression 3D, etc.

### Exemples

Les exemples ci-dessous, issus de calculs, illustrent les gains en termes de surface de filtration ou en termes d'encombrement (volume du filtre) d'exemples de filtres selon l'invention, par rapport à un filtre classique comportant des canaux à section transversale carrée constante. L'épaisseur des parois n'est pas considérée.

Soit par exemple un filtre à particules classique comportant 400 canaux par pouce carré. Les canaux ont une section carrée constante orthogonalement à l'axe X, dont le côté mesure 1,27 mm. La longueur des canaux est de 152,4 mm (6"). La surface de filtration est de 774 mm².

Toujours à titre d'exemple, considérons un filtre selon l'invention avec une géométrie polygonale évolutive tout au long du canal, dont la section carrée d'entrée du canal a un côté plus long d'un facteur racine de 2 par rapport au côté de la section carrée du filtre classique, soit une section carrée pour l'extrémité ouverte de côté 1,27 x 1,414 = 1,80 mm.

Dans le cas où les canaux ont une géométrie hexadécagonale évolutive telle que décrite en relation avec les figures 3A à 3C, avec une section transversale de référence carrée de côté e = 1,27 mm, la surface de filtration atteint 934 mm², soit plus de 20 % de plus que la surface de filtration du filtre classique. A iso-performances, le volume du filtre à particules selon l'invention peut ainsi être réduit d'environ 17 %.

Dans le cas où les canaux ont une géométrie dodécagonale évolutive telle que décrite en relation avec les figures 5A à 5C, avec une section transversale de référence carrée de côté e = 1,27 mm, la surface de filtration atteint 909 mm², soit plus de 17 % de plus que la surface de filtration du filtre classique. A iso-performances, le volume du filtre à particules selon l'invention peut ainsi être réduit d'environ 15 %.

Dans le cas où les canaux ont une géométrie octogonale évolutive telle que décrite en relation avec les figures 7A à 7C, avec une section transversale de référence carrée de côté e = 1,27 mm, la surface de filtration atteint 894 mm², soit plus de 15 % de plus que la surface de filtration du filtre classique. A iso-performances, le volume du filtre à particules selon l'invention peut ainsi être réduit d'environ 13 %.

A iso-performances, les diminutions de volume permises réduisent le coût matière, le poids, l'encombrement, ou, à iso-volume, la diminution de la perte de charge et l'amélioration du taux de captation des particules, du fait de la réduction des vitesses de passage des gaz.

La longueur totale du filtre à particules selon l'invention peut être diminuée :
- d'un facteur 1,17 pour la géométrie hexadécagonale évolutive exemplifiée, ce qui la porte de 152,4 mm (6") pour un filtre classique à 130 mm.
- d'un facteur 1,15 pour la géométrie dodécagonale évolutive exemplifiée, ce qui la porte de 152,4 mm (6") à 132,5 mm,
- d'un facteur 1,13 pour la géométrie octogonale évolutive exemplifiée, ce qui la porte de 152,4 mm (6") à 135 mm.

## Revendications

1. Filtre à particules pour collecter les particules des gaz d'échappement d'un moteur à combustion, ledit filtre comportant un corps en matériau poreux (monolithique) allongé selon un axe X, ledit corps comprenant :
- une face d'entrée (40, 1104) par laquelle les gaz d'échappement entrent dans le filtre,
- une face de sortie par laquelle les gaz d'échappement ressortent du filtre,
- une pluralité de canaux d'entrée et de canaux de sortie (370, 380, 570, 580, 770, 780, 1170, 1270) s'étendant entre la face d'entrée (40, 1104) et la face de sortie parallèlement à l'axe X, chaque canal d'entrée (370, 570, 770) étant séparé d'un canal de sortie (380, 580, 780) adjacent par une paroi commune filtrante (371, 571, 771, 1171, 1271) apte à laisser passer les gaz d'échappement, pour former une structure de type nid d'abeille, les canaux d'entrée et de sortie (370, 380, 570, 580, 770, 780, 1170, 1270) comportant chacun :
- une extrémité ouverte de section transversale carrée orthogonalement à l'axe X (20, 310, 510, 710, 1110, 1210),
- une extrémité fermée (360, 560, 760, 1160),
- une section transversale de référence carrée orthogonalement à l'axe X (21, 330, 350, 550, 750, 1150, 1250), située entre lesdites extrémités ouverte et fermée, de préférence située à mi-chemin entre la face d'entrée (40, 1104) et la face de sortie, chacun des quatre sommets (21) de la section transversale de référence (21, 330, 350, 550, 750, 1150, 1250) étant commun à deux canaux d'entrée et deux canaux de sortie, et les quatre sommets (21) de la section transversale de référence carrée (21, 330, 350, 550, 750, 1150, 1250) ayant une position inchangée pour toute section du canal orthogonalement à l'axe X, les extrémités ouvertes des canaux d'entrée étant contiguës sur la face d'entrée (40, 1104) et les extrémités ouvertes des canaux de sortie étant contiguës sur la face de sortie, lesdites extrémités ouvertes formant un quadrillage, la géométrie de chaque canal d'entrée et de sortie est non constante tout au long du canal selon l'axe X, telle que, pour chaque canal d'entrée et de sortie :
- le périmètre de la section du canal décroît de manière continue depuis l'extrémité ouverte (20, 310, 510, 710, 1110, 1210) du canal jusqu'à la section transversale de référence (21, 330, 350, 550, 750, 1150, 1250) dudit canal, puis croit de manière continue de ladite section transversale de référence (21, 330, 350, 550, 750, 1150, 1250) jusqu'à l'extrémité fermée (360, 560, 760, 1160), et
- la surface de la section du canal décroit de façon monotone selon l'axe X depuis l'extrémité ouverte (20, 310, 510, 710, 1110, 1210) du canal jusqu'à l'extrémité fermée (360, 560, 760, 1160) où ladite surface est nulle, ladite extrémité fermée (360, 560, 760, 1160) étant située dans le corps du filtre à proximité de face de sortie pour le canal d'entrée (370, 570, 770) et étant située dans le corps du filtre à proximité de la face d'entrée (40, 1104) pour le canal de sortie (380, 580, 780).

2. Filtre selon la revendication 1, dans lequel chaque canal d'entrée et de sortie (370, 380, 570, 580, 770, 780, 1170, 1270) a une section polygonale d'ordre 4n selon tout plan orthogonal à l'axe X entre l'extrémité ouverte (20, 310, 510, 710, 1110, 1210) et la section transversale de référence (21, 330, 350, 550, 750, 1150, 1250) d'une part, et entre la section transversale de référence (21, 330, 350, 550, 750, 1150, 1250) et l'extrémité fermée (360, 560, 760, 1160) d'autre part, n'étant un entier préférentiellement compris entre 2 et 4.

3. Filtre selon la revendication 2, dans lequel la section polygonale d'ordre 4n forme un polygone convexe entre l'extrémité ouverte (20, 310, 510, 710, 1110, 1210) et la section transversale de référence (21, 330, 350, 550, 750, 1150, 1250), et est un polygone concave entre la section transversale de référence (21, 330, 350, 550, 750, 1150, 1250) et l'extrémité fermée (360, 560, 760, 1160).

4. Filtre selon l'une des revendications précédentes, dans lequel la section des canaux d'entrée et de sortie est octogonale orthogonalement à l'axe X (720, 730, 740) entre les extrémités ouverte (710) et fermée (760) de chaque canal (770, 780), à l'exception de la section transversale de référence (750).

5. Filtre selon l'une des revendications précédentes, dans lequel la section des canaux d'entrée et de sortie est dodécagonale orthogonalement à l'axe X (520, 530, 540) entre les extrémités ouverte (510) et fermée (560) de chaque canal (570, 580), à l'exception de la section transversale de référence (550).

6. Filtre selon l'une des revendications précédentes, dans lequel la section des canaux d'entrée et de sortie est hexadécagonale orthogonalement à l'axe X (320, 330, 340n 350) entre les extrémités ouverte (310) et fermée (360) de chaque canal (370, 380), à l'exception de la section transversale de référence (330, 350).

7. Filtre selon l'une des revendications précédentes, dans lequel, pour chaque canal d'entrée et de sortie, la section carrée de l'extrémité ouverte X (20, 310, 510, 710, 1110, 1210) est obtenue par homothétie d'un rapport k positif, de préférence k étant égal à racine de 2, et par rotation, de préférence d'un angle de 45°, de la section transversale de référence carrée (21, 330, 350, 550, 750, 1150, 1250).

8. Filtre selon l'une des revendications précédentes, dans lequel l'extrémité fermée (360, 560, 760, 1160) des canaux d'entrée est située dans le corps du filtre à une distance *yₑ* de la face de sortie et lequel l'extrémité fermée des canaux de sortie est située dans le corps du filtre à une distance *yₛ* de la face d'entrée, les distances *yₑ* et *yₛ* étant comprises entre 1 et 50 fois l'épaisseur des parois.

9. Filtre selon l'une des revendications précédentes, dans lequel la section transversale de référence (330, 350, 550, 750) de chaque canal d'entrée et de sortie est contenue dans un même plan de référence orthogonal à l'axe X, ledit plan de référence étant situé à mi-chemin entre la face d'entrée et la face de sortie.

10. Filtre selon l'une des revendications précédentes, dans lequel le périmètre et la surface de la section des canaux évoluent de manière symétrique de part et d'autre de la section transversale de référence (330, 350, 550, 750).

11. Filtre selon l'une des revendications 1 à 8, dans lequel la section transversale de référence (1150, 1250) de chaque canal d'entrée et de sortie est contenue dans un même plan de référence orthogonal à l'axe X, ledit plan de référence étant plus proche de la face de sortie que de la face d'entrée (1104).

12. Filtre selon l'une des revendications précédentes, dans lequel les parois communes filtrantes (371, 571, 771, 1171, 1271) séparant les canaux d'entrée et de sortie (370, 380, 570, 580, 770, 780, 1170, 1270) comprennent un revêtement catalytique pour le traitement d'au moins un composé contenu dans les gaz d'échappements choisi dans la liste constituée par: les hydrocarbures imbrûlés (HC), l'oxyde de carbone (CO), les oxydes d'azote (NOx), NH₃, SO₂, H₂S.

13. Méthode de fabrication d'un filtre à particules selon l'une des revendications 1 à 12 par stéréolithographie, dans laquelle on construit le corps du filtre par solidification d'un matériau poreux sous forme de couches successives au moyen d'un stéréolithographe qui reproduit un modèle 3D numérique préalablement établi dudit corps de filtre.

14. Méthode de fabrication d'un filtre à particules selon l'une des revendications 1 à 12 par impression 3D, dans laquelle on construit le corps du filtre par dépôt d'un matériau poreux sous forme de couches successives au moyen d'une imprimante 3D qui reproduit un modèle 3D numérique préalablement établi dudit corps de filtre.

15. Méthode de fabrication d'un filtre à particules selon l'une des revendications 1 à 12, dans laquelle :
- on obtient par extrusion un corps de filtre en matériau poreux allongé selon un axe X, comportant une pluralité de canaux initiaux s'étendant parallèlement à l'axe X et de section constante carrée orthogonalement à l'axe X, et s'ouvrant à leurs deux extrémités sur la face d'entrée et la face de sortie dudit corps, et
- on déforme lesdits canaux initiaux en introduisant un outil pénétrant (401, 402, 403, 601, 602, 603, 801, 802, 803) dans lesdits canaux initiaux par une de leurs extrémités sur chacune des faces d'entrée et de sortie, et jusqu'à un point *D* donné le long de l'axe X, au minimum jusqu'au milieu dudit corps, de manière à obtenir les canaux d'entrée et de sortie du filtre selon l'une des revendications 1 à 12.

16. Méthode de fabrication selon la revendication précédente, dans laquelle :
- l'outil pénétrant comporte un socle muni d'un ensemble de protrusions polyédriques allongées selon un même axe W, lesdites protrusions comportant une première base (401, 601, 801) et une deuxième base (402, 602, 802) carrées situées dans des plans parallèles, la première base (401, 601, 801) étant en contact avec ledit socle, lesdites première (401, 601, 801) et deuxième (402, 602, 802) bases étant reliées par 4n facettes (403, 603, 803), n'étant un entier préférentiellement compris entre 2 et 4, de manière à ce que la section de la protrusion selon un plan orthogonal à l'axe W ait une forme de polygone convexe irrégulier d'ordre 4n évolutive, de préférence telle que le périmètre de ladite section de la protrusion décroît de manière continue depuis la première base (401, 601, 801) jusqu'à la deuxième base (402, 602, 802) en même temps que la surface de ladite section de la protrusion décroit de façon monotone depuis la première base (401, 601, 801) jusqu'à la deuxième base (402, 602, 802), et
- l'outil pénétrant et le corps du filtre étant configurés de manière à ce que lorsque l'outil pénétrant est appliqué sur chacune des faces d'entrée et de sortie du corps du filtre, les protrusions pénètrent dans un canal sur deux sur chaque face selon un motif en damier.

## Patentansprüche

1. Partikelfilter zum Sammeln der Partikel der Abgase eines Verbrennungsmotors, wobei der Filter einen entlang einer X-Achse länglichen Körper aus porösem Material (monolithisch) aufweist, wobei der Körper umfasst:
- eine Eintrittsseite (40, 1104), durch welche die Abgase in den Filter eintreten,
- eine Austrittsseite, durch welche die Abgase wieder aus dem Filter austreten,
- eine Mehrzahl von Eintrittskanälen und Austrittskanälen (370, 380, 570, 580, 770, 780, 1170, 1270), die sich zwischen der Eintrittsseite (40, 1104) und der Austrittsseite parallel zur X-Achse erstrecken, wobei jeder Eintrittskanal (370, 570, 770) von einem benachbarten Austrittskanal (380, 580, 780) durch eine gemeinsame Filterwand (371, 571, 771, 1171, 1271) getrennt ist, die geeignet ist, die Abgase durchzulassen, um eine Wabenstruktur zu bilden, wobei die Eintritts- und Austrittskanäle (370, 380, 570, 580, 770, 780, 1170, 1270) jeweils aufweisen:
- ein offenes Ende mit quadratischem Querschnitt senkrecht zur X-Achse (20, 310, 510, 710, 1110, 1210),
- ein geschlossenes Ende (360, 560, 760, 1160),
- einen quadratischen Referenzquerschnitt senkrecht zur X-Achse (23, 330, 350, 550, 750, 1150, 1250), der zwischen dem offenen und dem geschlossenen Ende gelegen ist, bevorzugt auf halbem Weg zwischen der Eintrittsseite (40, 1104) und der Austrittsseite, wobei jeder der vier Eckpunkte (21) des Referenzquerschnitts (23, 330, 350, 550, 750, 1150, 1250) zwei Eintrittskanälen und zwei Austrittskanälen gemein ist und wobei die vier Eckpunkte (21) des quadratischen Referenzquerschnitts (21, 330, 350, 550, 750, 1150, 1250) für den gesamten Querschnitt des Kanals senkrecht zur X-Achse eine unveränderte Position haben,
wobei die offenen Enden der Eintrittskanäle an der Eintrittsseite (40, 1104) aneinander angrenzen und die offenen Enden der Austrittskanäle an der Austrittsseite aneinander angrenzen, wobei die offenen Enden ein Gitter bilden,
wobei die Geometrie jedes Eintritts- und Austrittskanals nicht über die gesamte Länge des Kanals entlang der X-Achse konstant ist, so dass bei jedem Eintritts- und Austrittskanal:
- der Umfang des Querschnitts des Kanals vom offenen Ende (20, 310, 510, 710, 1110, 1210) des Kanals aus bis zum Referenzquerschnitt (21, 330, 350, 550, 750, 1150, 1250) des Kanals stetig abnimmt, dann vom Referenzquerschnitt (21, 330, 350, 550, 750, 1150, 1250) bis zum geschlossenen Ende (360, 560, 760, 1160) stetig zunimmt, und
- die Fläche des Querschnitts des Kanals entlang der X-Achse vom offenen Ende (20, 310, 510, 710, 1110, 1210) des Kanals aus bis zum geschlossenen Ende (360, 560, 760, 1160), an dem die Fläche null ist, gleichförmig abnimmt, wobei das geschlossene Ende (360, 560, 760, 1160) im Körper des Filters beim Eintrittskanal (370, 570, 770) in der Nähe der Austrittsseite und beim Austrittskanal (380, 580, 780) in der Nähe der Eintrittsseite (40, 1104) gelegen ist.

2. Filter nach Anspruch 1, bei dem jeder Eintritts- und Austrittskanal (370, 380, 570, 580, 770, 780, 1170, 1270) einen polygonalen Querschnitt der Ordnung 4n entlang jeder senkrecht zur X-Achse verlaufenden Ebene zwischen dem offenen Ende (20, 310, 510, 710, 1110, 1210) und dem Referenzquerschnitt (21, 330, 350, 550, 750, 1150, 1250) zum einen und zwischen dem Referenzquerschnitt (21, 330, 350, 550, 750, 1150, 1250) und dem geschlossenen Ende (360, 560, 760, 1160) zum anderen hat, wobei n eine ganze Zahl ist, bevorzugt zwischen 2 und 4.

3. Filter nach Anspruch 2, bei dem der polygonale Querschnitt der Ordnung 4n ein konvexes Polygon zwischen dem offenen Ende (20, 310, 510, 710, 1110, 1210) und dem Referenzquerschnitt (21, 330, 350, 550, 750, 1150, 1250) bildet und ein konkaves Polygon zwischen dem Referenzquerschnitt (21, 330, 350, 550, 750, 1150, 1250) und dem geschlossenen Ende (360, 560, 760, 1160) ist.

4. Filter nach einem der vorhergehenden Ansprüche, bei dem der Querschnitt der Eintritts- und Austrittskanäle senkrecht zur X-Achse zwischen dem offenen Ende (710) und dem geschlossenen Ende (760) jedes Kanals (770, 780) achteckig (720, 730, 740) ist, mit Ausnahme des Referenzquerschnitts (750).

5. Filter nach einem der vorhergehenden Ansprüche, bei dem der Querschnitt der Eintritts- und Austrittskanäle senkrecht zur X-Achse zwischen dem offenen Ende (510) und dem geschlossenen Ende (560) jedes Kanals (570, 580) zwölfeckig (520, 530, 540) ist, mit Ausnahme des Referenzquerschnitts (550).

6. Filter nach einem der vorhergehenden Ansprüche, bei dem der Querschnitt der Eintritts- und Austrittskanäle senkrecht zur X-Achse zwischen dem offenen Ende (310) und dem geschlossenen Ende (360) jedes Kanals (370, 380) sechzehneckig (320, 330, 340, 350) ist, mit Ausnahme des Referenzquerschnitts (330, 350) .

7. Filter nach einem der vorhergehenden Ansprüche, bei dem für jeden Eintritts- und Austrittskanal der quadratische Querschnitt des offenen Endes (20, 310, 510, 710, 1110, 1210) durch Homothetie um einen positiven Verhältniswert k, wobei k bevorzugt gleich der Wurzel von 2 ist, und durch Rotation, bevorzugt um einen Winkel von 45°, des quadratischen Referenzquerschnitts (21, 330, 350, 550, 750, 1150, 1250) erhalten wird.

8. Filter nach einem der vorhergehenden Ansprüche, bei dem das geschlossene Ende (360, 560, 760, 1160) der Eintrittskanäle im Körper des Filters in einem Abstand *y*ₑ von der Austrittsseite gelegen ist und bei dem das geschlossene Ende der Austrittskanäle im Körper des Filters in einem Abstand yₛ von der Eintrittsseite gelegen ist, wobei die Abstände yₑ und yₛ zwischen dem 1- und 50-Fachen der Dicke der Wände betragen.

9. Filter nach einem der vorhergehenden Ansprüche, bei dem der Referenzquerschnitt (330, 350, 550, 750) jedes Eintritts- und Austrittskanals in der gleichen Referenzebene senkrecht zur X-Achse enthalten ist, wobei die Referenzebene auf halbem Weg zwischen der Eintrittsseite und der Austrittsseite gelegen ist.

10. Filter nach einem der vorhergehenden Ansprüche, bei dem der Umfang und die Fläche des Querschnitts der Kanäle beidseits des Referenzquerschnitts (330, 350, 550, 750) symmetrisch verlaufen.

11. Filter nach einem der Ansprüche 1 bis 8, bei dem der Referenzquerschnitt (1150, 1250) jedes Eintritts- und Austrittskanals in der gleichen Referenzebene senkrecht zur X-Achse enthalten ist, wobei die Referenzebene der Austrittsseite näher als der Eintrittsseite (1104) ist.

12. Filter nach einem der vorhergehenden Ansprüche, bei dem die gemeinsamen Filterwände (371, 571, 771, 1171, 1271), welche die Eintritts- und Austrittskanäle (370, 380, 570, 580, 770, 780, 1170, 1270) trennen, eine katalytische Beschichtung zur Behandlung mindestens einer in den Abgasen enthaltenen Verbindung umfassen, die aus der Liste gewählt ist, die besteht aus: unverbrannten Kohlenwasserstoffen (HC), Kohlenmonoxid (CO), Stickstoffoxiden (NOx), NH₃, SO₂, H₂S.

13. Verfahren zur Herstellung eines Partikelfilters nach einem der Ansprüche 1 bis 12 durch Stereolithographie, bei dem man den Körper des Filters durch Verfestigung eines porösen Materials in Form aufeinander folgender Schichten mittels eines Stereolithographen aufbaut, der ein zuvor erstelltes digitales 3D-Modell des Filterkörpers nachbildet.

14. Verfahren zur Herstellung eines Partikelfilters nach einem der Ansprüche 1 bis 12 durch 3D-Druck, bei dem man den Körper des Filters durch Aufbringen eines porösen Materials in Form aufeinander folgender Schichten mittels eines 3D-Druckers aufbaut, der ein zuvor erstelltes digitales 3D-Modell des Filterkörpers nachbildet.

15. Verfahren zur Herstellung eines Partikelfilters nach einem der Ansprüche 1 bis 12, bei dem:
- man durch Strangpressen einen entlang einer X-Achse länglichen Körper aus porösem Material erhält, der eine Vielzahl von Ausgangskanälen aufweist, die sich parallel zur X-Achse erstrecken und senkrecht zur X-Achse einen konstanten quadratischen Querschnitt haben und sich an ihren beiden Enden an der Eintrittsseite und der Austrittsseite des Körpers öffnen, und
- man die Ausgangskanäle verformt, indem man ein eindringendes Werkzeug (401, 402, 403, 601, 602, 603, 801, 802, 803) in die Ausgangskanäle von einem ihrer Enden aus an jeder Eintritts- und Austrittsseite und bis zu einem gegebenen Punkt D entlang der X-Achse einführt, mindestens bis zur Mitte des Körpers, so dass die Eintritts- und Austrittskanäle des Filters nach einem der Ansprüche 1 bis 12 erhalten werden.

16. Herstellungsverfahren nach dem vorhergehenden Anspruch, bei dem:
- das eindringende Werkzeug einen Sockel aufweist, der mit einer Anordnung von entlang der gleichen W-Achse länglichen vielflächigen Vorsprüngen versehen ist, wobei die Vorsprünge eine erste quadratische Grundfläche (401, 601, 801) und eine zweite quadratische Grundfläche (402, 602, 802) aufweisen, die in parallelen Ebenen gelegen sind, wobei die erste Grundfläche (401, 601, 801) mit dem Sockel in Kontakt ist, wobei die erste (401, 601, 801) und die zweite (402, 602, 802) Grundfläche über 4n Facetten (403, 603, 803) verbunden sind, wobei n eine ganze Zahl bevorzugt zwischen 2 und 4 ist, so dass der Querschnitt des Vorsprungs entlang einer senkrecht zur W-Achse verlaufenden Ebene die Form eines evolutiven unregelmäßigen konvexen Polygons der Ordnung 4n hat, bevorzugt derart, dass der Umfang des Querschnitts des Vorsprungs von der ersten Grundfläche (401, 601, 801) aus bis zur zweiten Grundfläche (402, 602, 802) stetig abnimmt und gleichzeitig die Fläche des Querschnitts des Vorsprungs von der ersten Grundfläche (401, 601, 801) aus bis zur zweiten Grundfläche (402, 602, 802) gleichförmig zunimmt, und
- das eindringende Werkzeug und der Körper des Filters so gestaltet sind, dass die Vorsprünge beim Ansetzen des eindringenden Werkzeugs an jeder der Eintritts- und Austrittsseiten des Körpers des Filters auf jeder Seite schachbrettmusterartig in jeden zweiten Kanal eindringen.

## Claims

1. Particulate filter for collecting the particles of exhaust gases from a combustion engine, said filter having a (monolithic) body made of porous material that extends in an elongate manner along an axis X, said body comprising:
- an inlet face (40, 1104) through which the exhaust gases enter the filter,
- an outlet face through which the exhaust gases exit the filter again,
- a plurality of inlet channels and outlet channels (370, 380, 570, 580, 770, 780, 1170, 1270) extending between the inlet face (40, 1104) and the outlet face parallel to the axis X, each inlet channel (370, 570, 770) being separated from an adjacent outlet channel (380, 580, 780) by a common filtering wall (371, 571, 771, 1171, 1271) that is able to allow through the exhaust gases, in order to form a honeycomb-type structure, the inlet and outlet channels (370, 380, 570, 580, 770, 780, 1170, 1270) each having:
- an open end with a cross section that is square orthogonally to the axis X (20, 310, 510, 710, 1110, 1210),
- a closed end (360, 560, 760, 1160),
- a reference cross section that is square orthogonally to the axis X (23, 330, 350, 550, 750, 1150, 1250), situated between said open and closed ends, preferably situated halfway between the inlet face (40, 1104) and the outlet face, each of the four vertices (21) of the reference cross section (23, 330, 350, 550, 750, 1150, 1250) being common to two inlet channels and two outlet channels, and the four vertices (21) of the square reference cross section (21, 330, 350, 550, 750, 1150, 1250) having an unchanging position for every section of the channel orthogonally to the axis X,
the open ends of the inlet channels being contiguous at the inlet face (40, 1104) and the open ends of the outlet channels being contiguous at the outlet face, said open ends forming a grid pattern,
the geometry of each inlet and outlet channel not being constant along the entire length of the channel along the axis X, such that, for each inlet and outlet channel:
- the perimeter of the section of the channel decreases continuously from the open end (20, 310, 510, 710, 1110, 1210) of the channel to the reference cross section (21, 330, 350, 550, 750, 1150, 1250) of said channel, and then increases continuously from said reference cross section (21, 330, 350, 550, 750, 1150, 1250) to the closed end (360, 560, 760, 1160), and
- the area of the section of the channel decreases uniformly along the axis X from the open end (20, 310, 510, 710, 1110, 1210) of the channel to the closed end (360, 560, 760, 1160), where said area is zero, said closed end (360, 560, 760, 1160) being situated in the body of the filter close to the outlet face for the inlet channel (370, 570, 770) and being situated in the body of the filter close to the inlet face (40, 1104) for the outlet channel (380, 580, 780).

2. Filter according to Claim 1, wherein each inlet and outlet channel (370, 380, 570, 580, 770, 780, 1170, 1270) has a polygonal section of order 4n in every plane orthogonal to the axis X between the open end (20, 310, 510, 710, 1110, 1210) and the reference cross section (21, 330, 350, 550, 750, 1150, 1250), for the one part, and between the reference cross section (21, 330, 350, 550, 750, 1150, 1250) and the closed end (360, 560, 760, 1160), for the other part, n being an integer preferably between 2 and 4.

3. Filter according to Claim 2, wherein the polygonal section of order 4n forms a convex polygon between the open end (20, 310, 510, 710, 1110, 1210) and the reference cross section (21, 330, 350, 550, 750, 1150, 1250), and is a concave polygon between the reference cross section (21, 330, 350, 550, 750, 1150, 1250) and the closed end (360, 560, 760, 1160).

4. Filter according to one of the preceding claims, wherein the section of the inlet and outlet channels is octagonal orthogonally to the axis X (720, 730, 740) between the open end (710) and closed end (760) of each channel (770, 780), except for the reference cross section (750) .

5. Filter according to one of the preceding claims, wherein the section of the inlet and outlet channels is dodecagonal orthogonally to the axis X (520, 530, 540) between the open end (510) and closed end (560) of each channel (570, 580), except for the reference cross section (550) .

6. Filter according to one of the preceding claims, wherein the section of the inlet and outlet channels is hexadecagonal orthogonally to the axis X (320, 330, 340 350) between the open end (310) and closed end (360) of each channel (370, 380), except for the reference cross section (330, 350).

7. Filter according to one of the preceding claims, wherein, for each inlet and outlet channel, the square section of the open end (20, 310, 510, 710, 1110, 1210) is obtained by homothetic transformation by a positive ratio k, k preferably being equal to the root of 2, and by rotation, preferably through an angle of 45°, of the square reference cross section (21, 330, 350, 550, 750, 1150, 1250).

8. Filter according to one of the preceding claims, wherein the closed end (360, 560, 760, 1160) of the inlet channels is situated in the body of the filter at a distance *yₑ* from the outlet face, and wherein the closed end of the outlet channels is situated in the body of the filter at a distance *yₛ* from the inlet face, the distances *yₑ* and *yₛ* being between 1 and 50 times the thickness of the walls.

9. Filter according to one of the preceding claims, wherein the reference cross section (330, 350, 550, 750) of each inlet and outlet channel is contained in one and the same reference plane orthogonal to the axis X, said reference plane being situated halfway between the inlet face and the outlet face.

10. Filter according to one of the preceding claims, wherein the perimeter and the area of the section of the channels evolve symmetrically on either side of the reference cross section (330, 350, 550, 750).

11. Filter according to one of Claims 1 to 8, wherein the reference cross section (1150, 1250) of each inlet and outlet channel is contained in one and the same reference plane orthogonal to the axis X, said reference plane being closer to the outlet face than to the inlet face (1104).

12. Filter according to one of the preceding claims, wherein the common filtering walls (371, 571, 771, 1171, 1271) separating the inlet and outlet channels (370, 380, 570, 580, 770, 780, 1170, 1270) comprise a catalytic coating for the treatment of at least one compound contained in the exhaust gases, said compound being chosen from the following list: unburned hydrocarbons (HC), carbon monoxide (CO), nitrogen oxides (NOx), NH₃, SO₂, H₂S.

13. Method for manufacturing a particulate filter according to one of Claims 1 to 12 by stereolithography, wherein the body of the filter is constructed by solidifying a porous material in the form of successive layers by means of a stereolithography machine which reproduces a previously established digital 3D model of said filter body.

14. Method for manufacturing a particulate filter according to one of Claims 1 to 12 by 3D printing, wherein the body of the filter is constructed by deposition of a porous material in the form of successive layers by means of a 3D printer which reproduces a previously established digital 3D model of said filter body.

15. Method for manufacturing a particulate filter according to one of Claims 1 to 12, wherein:
- a filter body made of porous material that extends in an elongate manner along an axis X is obtained by extrusion, said filter body having a plurality of initial channels that extend parallel to the axis X and have a constant section that is square orthogonally to the axis X, and open at their two ends onto the inlet face and the outlet face of said body, and
- said initial channels are deformed by introducing a penetrating tool (401, 402, 403, 601, 602, 603, 801, 802, 803) into said initial channels through one of their ends at each of the inlet and outlet faces, and as far as a given point *D* along the axis X, at least as far as the middle of said body, so as to obtain the inlet and outlet channels of the filter according to one of Claims 1 to 12.

16. Manufacturing method according to the preceding claim, wherein:
- the penetrating tool has a block provided with a set of polyhedral protrusions that extend in an elongate manner along one and the same axis W, said protrusions having a first square base (401, 601, 801) and a second square base (402, 602, 802) that are situated in parallel planes, the first base (401, 601, 801) being in contact with said block, said first (401, 601, 801) and second (402, 602, 802) bases being connected by 4n facets (403, 603, 803), n being an integer preferably between 2 and 4, such that the section of the protrusion in a plane orthogonal to the axis W is in the form of an evolving irregular convex polygon of order 4n, preferably such that the perimeter of said section of the protrusion decreases continuously from the first base (401, 601, 801) to the second base (402, 602, 802) at the same time as the area of said section of the protrusion decreases uniformly from the first base (401, 601, 801) to the second base (402, 602, 802), and
- the penetrating tool and the body of the filter being configured such that when the penetrating tool is applied to each of the inlet and outlet faces of the body of the filter, the protrusions pass into every other channel on each face in a checkerboard pattern.
